(19) 

Europäisches
Patentamt
European
Patent Office
Office européen
des brevets

(11) **EP 4 328 020 A1**

(12) **EUROPEAN PATENT APPLICATION**
published in accordance with Art. 153(4) EPC

(43) Date of publication:
**28.02.2024 Bulletin 2024/09**

(21) Application number: **22791465.2**

(22) Date of filing: **24.03.2022**

(51) International Patent Classification (IPC):
**B32B 27/00** (2006.01) **B32B 27/30** (2006.01)
**C09J 11/08** (2006.01) **C09J 125/10** (2006.01)
**C09J 133/08** (2006.01) **C09J 133/10** (2006.01)
**C09J 153/00** (2006.01) **C09J 7/24** (2018.01)
**C09J 7/38** (2018.01)

(52) Cooperative Patent Classification (CPC):
**B32B 27/00; B32B 27/30; C09J 7/24; C09J 7/38;**
**C09J 11/08; C09J 125/10; C09J 133/08;**
**C09J 133/10; C09J 153/00**

(86) International application number:
**PCT/JP2022/013779**

(87) International publication number:
**WO 2022/224688 (27.10.2022 Gazette 2022/43)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **20.04.2021 JP 2021071353**

(71) Applicant: **Kuraray Co., Ltd.**
**Kurashiki-shi, Okayama 710-0801 (JP)**

(72) Inventors:
• **AKAI, Makoto**
**Tsukuba-shi, Ibaraki 305-0841 (JP)**
• **ONO, Tomohiro**
**Tsukuba-shi, Ibaraki 305-0841 (JP)**

(74) Representative: **Müller-Boré & Partner**
**Patentanwälte PartG mbB**
**Friedenheimer Brücke 21**
**80639 München (DE)**

(54) **ADHESIVE COMPOSITION, LAMINATE, AND SURFACE PROTECTIVE FILM**

(57)     Provided are: a pressure-sensitive adhesive composition which is excellent in moldability for various moldings such as extrusion molding, is excellent in film formability, and has excellent adhesion even to high-polarity materials; a pressure-sensitive adhesive composition which can be easily produced and stably exhibits the above-described characteristics; a laminate which includes a base material and an adhesive layer containing the pressure-sensitive adhesive composition; and a surface protection film which includes the laminate and has an excellent unwinding force. The pressure-sensitive adhesive composition includes a styrenic block copolymer (A1) and an acrylic block copolymer (B), wherein (1) the melt viscosity of the styrenic block copolymer (A1) and the melt viscosity of the acrylic block copolymer (B) satisfy a specific relationship, (2) the mass ratio between the content of the styrenic block copolymer (A1) and the content of the acrylic block copolymer (B) in the pressure-sensitive adhesive composition is in a specific relationship, (3) the styrenic block copolymer (A1) is a hydrogenated product of a block copolymer (P1) including a specific polymer block, and (4) the acrylic block copolymer (B) includes a specific polymer block and has a number average molecular weight in a specific range.

EP 4 328 020 A1

## Description

Technical Field

The present invention relates to a pressure-sensitive adhesive composition, a laminate, and a surface protection film.

Background Art

A thermoplastic elastomer composition containing a styrenic elastomer is excellent in moldability, and hence has been up to now used to fabricate molded bodies of various forms by hot melt molding such as injection molding and extrusion molding, and these molded bodies have been used as members for various applications such as home electric appliances, electronic components, automobile components, and mechanical components.

In accordance with the purposes of the various applications described above, there are cases, for example, a member made of a composition containing a styrenic elastomer is used with being bonded or adhered to, or in combination with a member made of a different material. For example, also for a composition containing a styrenic elastomer, there are cases where a layer formed of a composition containing a styrenic elastomer is required to be used with being adhered to a layer formed of a different material.

However, the styrenic elastomer is a block copolymer including a polymer block containing a structural unit derived from an aromatic vinyl compound and a polymer block containing a structural unit derived from a conjugated diene, and is typically a low-polarity material, and therefore the styrenic elastomer has insufficient adhesion to a high-polarity material, such as a polar resin, ceramics, a metal, for example, hence there has been a case where satisfactory adhesiveness was not able to be obtained between a layer made of a composition containing the styrenic elastomer and a layer made of a high-polarity material.

As a means for solving this problem, it is conceivable that a high-polarity material, for example, an acrylic polymer is included in a composition containing a styrenic elastomer. For example, as for a surface protection film capable of protecting the surface of a high-polarity material such as glass or a metal, there has been studied a surface protection film including a polyolefin-based base material and an adhesive layer containing a composition in which an acrylic pressure sensitive adhesive and a tackifier are further contained in a styrenic elastomer (See, e.g., Patent Literature 1).

Citation List

Patent Literature

Patent Literature 1: WO 2015/076332 A

Summary of Invention

Technical Problem

The surface protection film of Patent Literature 1 is a surface protection film excellent in that unwinding force is not impaired (an unroll property is not impaired) and a surface protection film with an enhanced adhesive strength of the adhesive layer can be obtained. However, there has been a case where the film had a problem in its film formability (moldability) in an attempt to perform molding by a process such as an extrusion molding in order to obtain a surface protection film, for example, in a case of producing a film without using a tackifier, for example.

The present invention has been made in view of the above-mentioned circumstances, and an object of the present invention is to provide: a pressure-sensitive adhesive composition excellent in film formability and having an excellent adhesion even to high-polarity materials; a pressure-sensitive adhesive composition that can be easily produced and stably exhibits the above-mentioned properties; a laminate including a base material and an adhesive layer including the pressure-sensitive adhesive composition; and a surface protection film including the laminate and excellent in unwinding force.

Solution to Problem

The subject matters of the present invention are the following [1] to [12].

[1] A pressure-sensitive adhesive composition including a styrenic block copolymer (A1) and an acrylic block copolymer (B), wherein the pressure-sensitive adhesive composition satisfies the following conditions (1) to (4).

(1) The melt viscosity (measured at a temperature of 230°C and a shear rate of 121.6 (1/sec) in accordance with ISO 11443:1995) of the styrenic block copolymer (A1) < the melt viscosity (measured at a temperature of 230°C and a shear rate of 121.6 (1/sec) in accordance with ISO 11443:1995) of the acrylic block copolymer (B).
(2) In the pressure-sensitive adhesive composition, the mass ratio [(A1):(B)] of the content of the styrenic block copolymer (A1) to the content of the acrylic block copolymer (B) is from 10:90 to 90:10.
(3) The styrenic block copolymer (A1) is a hydrogenated product of a block copolymer (P1) including: one or more polymer blocks (a11) containing a structural unit derived from an aromatic vinyl compound; and one or more polymer blocks (a12) containing a structural unit derived from a conjugated diene.
(4) The acrylic block copolymer (B) includes: one or more polymer blocks (b11) containing a structural unit derived from an acrylic acid ester; and one or more polymer blocks (b12) containing a structural unit derived from a methacrylic acid ester, and has a number average molecular weight (Mn) of 60,000 or more and 300,000 or less.

[2] The pressure-sensitive adhesive composition according to [1], which further satisfies the following condition (5).
(5) The melt viscosity (measured at a temperature of 190°C and a shear rate of 121.6 (1/sec) in accordance with ISO 11443:1995) of styrenic block copolymer (A1) < the melt viscosity (measured at a temperature of 190°C and a shear rate of 121.6 (1/sec) in accordance with ISO 11443:1995) of acrylic block copolymer (B).
[3] The pressure-sensitive adhesive composition according to [1] or [2], further including a styrenic block copolymer (A2) satisfying the following conditions (6) to (8) .

(6) The melt viscosity (measured at a temperature of 230°C and a shear rate of 121.6 (1/sec) in accordance with ISO 11443:1995) of the acrylic block copolymer (B) < the melt viscosity (measured at a temperature of 230°C and a shear rate of 121.6 (1/sec) in accordance with ISO 11443:1995) of the styrenic block copolymer (A2).
(7) The styrenic block copolymer (A2) is a hydrogenated product of a block copolymer (P2) including: one or more polymer blocks (a21) containing a structural unit derived from an aromatic vinyl compound; and one or more polymer blocks (a22) containing a structural unit derived from a conjugated diene.
(8) The content of the polymer block (a21) in the block copolymer (P2) is from 5 to 25% by mass.

[4] The pressure-sensitive adhesive composition according to [3], wherein the mass ratio [((A1) + (A2)): (B)] of the total content of the styrenic block copolymer (A1) and the styrenic block copolymer (A2) to the content of the acrylic block copolymer (B) is from 10:90 to 90:10.
[5] The pressure-sensitive adhesive composition according to [3], wherein the mass ratio [(A1):(A2)] of the content of the styrenic block copolymer (A1) to the content of the styrenic block copolymer (A2) is from 10:90 to 90:10.
[6] The pressure-sensitive adhesive composition according to any one of [1] to [5], wherein the content of the polymer block (b12) in the acrylic block copolymer (B) is from 5 to 30% by mass.
[7] The pressure-sensitive adhesive composition according to any one of [1] to [6], further including a tackifier resin.
[8] The pressure-sensitive adhesive composition according to [7], wherein the tackifier resin is a hydrocarbon resin.
[9] A laminate including: an adhesive layer including the pressure-sensitive adhesive composition according to any one of [1] to [8]; and a base material.
[10] A surface protection film including the laminate according to [9].
[11] The surface protection film according to [10], whose base material is a base material containing a polyolefin.
[12] A method of producing a laminate, including melt lamination molding by which an adhesive layer including the pressure-sensitive adhesive composition according to any one of [1] to [8] is provided onto a base material.

Advantageous Effects of Invention

According to the present invention, it is possible to provide: a pressure-sensitive adhesive composition which is excellent in film formability and has excellent adhesion even to a high-polarity material; a pressure-sensitive adhesive composition which can be easily produced and stably exhibits the above-mentioned characteristics; a laminate including a base material and a pressure-sensitive adhesive layer containing the pressure-sensitive adhesive composition; and a surface protection film which is excellent in unwinding force and includes the laminate.

Description of Embodiments

As used herein: the term "(meth)acrylic acid ester" means "methacrylic acid ester" or "acrylic acid ester", and the term "(meth)acrylic" means "methacrylic" or "acrylic".

[Pressure-sensitive adhesive composition]

The pressure-sensitive adhesive composition of the present invention contains a styrenic block copolymer (A1) and an acrylic block copolymer (B), and satisfies the following conditions (1) to (4).

(1) The melt viscosity (measured at a temperature of 230°C and a shear rate of 121.6 (1/sec) in accordance with ISO 11443:1995) of the styrenic block copolymer (A1) < the melt viscosity (measured at a temperature of 230°C and a shear rate of 121.6 (1/sec) in accordance with ISO 11443:1995) of the acrylic block copolymer (B).

(2) In the pressure-sensitive adhesive composition, the mass ratio [(A1):(B)] of the content of the styrenic block copolymer (A1) to the content of the acrylic block copolymer (B) is from 10:90 to 90:10.

(3) The styrenic block copolymer (A1) is a hydrogenated product of a block copolymer (P1) including: one or more polymer blocks (a11) containing a structural unit derived from an aromatic vinyl compound; and one or more polymer blocks (a12) containing a structural unit derived from a conjugated diene.

(4) The acrylic block copolymer (B) includes: one or more polymer blocks (b11) containing a structural unit derived from an acrylic acid ester; and one or more polymer blocks (b12) containing a structural unit derived from a methacrylic acid ester, and has a number average molecular weight (Mn) of 60,000 or more and 300,000 or less.

<Styrenic block copolymer (A1)>

The styrenic block copolymer (A1) is a hydrogenated product of a block copolymer (P1) having: one or more polymer blocks (a11) containing a structural unit derived from an aromatic vinyl compound; and one or more polymer blocks (a12) containing a structural unit derived from a conjugated diene.

(Condition (3))

The pressure-sensitive adhesive composition of the present invention may contain one species of styrenic block copolymer (A1) singly or two or more species of styrenic block copolymers (A1).

[Polymer block (a11)]

The polymer block (a11) included in the block copolymer (P1) contains a structural unit derived from an aromatic vinyl compound. Examples of the aromatic vinyl compound include: styrene, $\alpha$-methylstyrene, 2-methylstyrene, 3-methylstyrene, 4-methylstyrene, 4-propylstyrene, 4-t-butylstyrene, 4-cyclohexylstyrene, 4-dodecylstyrene, 2,4-dimethylstyrene, 2,4-diisopropylstyrene, 2,4,6-trimethylstyrene, 2-ethyl-4-benzylstyrene, 4-(phenylbutyl)styrene, 1-vinylnaphthalene, 2-vinylnaphthalene, vinylanthracene, N,N-diethyl-4-(aminoethyl)styrene, vinylpyridine, 4-methoxystyrene, monochlorostyrene, dichlorostyrene, and divinylbenzene. As these aromatic vinyl compounds, one kind thereof may be used singly, or two or more kinds thereof may be used in combination. Among them, styrene, $\alpha$-methylstyrene, and 4-methylstyrene are preferable, and styrene is more preferable.

The polymer block (a11) may contain a structural unit derived from a monomer other than the aromatic vinyl compound, for example, a structural unit derived from another monomer such as a conjugated diene as a component in the polymer block (a12) described later. However, the content of the structural unit derived from the aromatic vinyl compound in the polymer block (a11) is preferably 60% by mass or more, more preferably 70% by mass or more, still more preferably 80% by mass or more, further more preferably 90% by mass or more, and particularly preferably 100% by mass.

[Polymer block (a12)]

The polymer block (a12) included in the block copolymer (P1) contains a structural unit derived from a conjugated diene. Examples of the conjugated diene include: butadiene, isoprene, 2,3-dimethyl-butadiene, 2-phenylbutadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, myrcene, farnesene, and chloroprene. One kind of these conjugated dienes may be used singly, or two or more kinds thereof may be used in combination. Among them, butadiene, isoprene, and farnesene are preferable.

The polymer block (a12) may contain a structural unit derived from a monomer other than a conjugated diene, for example, a structural unit derived from another monomer such as an aromatic vinyl compound as a component in the polymer block (a11). However, the content of the structural unit derived from a conjugated diene in the polymer block (a12) is preferably 60% by mass or more, more preferably 70% by mass or more, still more preferably 80% by mass or more, further more preferably 90% by mass or more, and particularly preferably 100% by mass.

(The degree of vinylation of polymer block (a12))

The degree of vinylation of the structural unit derived from a conjugated diene contained in the polymer block (a12) is not particularly limited, but the degree of vinylation is preferably from 1 to 95% by mole, more preferably from 2 to 90% by mole, still more preferably from 3 to 85% by mole, and particularly preferably from 4 to 80% by mole. Note that, when the styrenic block copolymer is produced by anionic polymerization described later, the degree of vinylation can be adjusted to a desired value by controlling factors such as the species of solvent to be used, the species and addition amount of a Lewis base to be used as necessary, or the polymerization temperature.

In the present invention, the term "degree of vinylation" means the total percentage by mole of structural units (structural unit derived from a conjugated diene compound bound through other than 1,4-bond (in a case other than farnesene) and 1,13-bond (in a case of farnesene)) derived from a conjugated diene compound bound through a 1,2-bond, a 3,4-bond (in a case other than farnesene), and a 3,13-bond (in a case of farnesene), relative to the total 100% by mole of structural units derived from a conjugated diene compound included in a specific polymer block (e.g., the polymer block (a12)). Note that, in the present invention, the degree of vinylation determined from the bonding configuration of the structural unit derived from the conjugated diene compound included in the polymer before hydrogenation is defined as the degree of vinylation of the polymer also in the polymer after hydrogenation. The degree of vinylation is calculated in the polymer before hydrogenation from the area ratio of a peak derived from a structural unit derived from a conjugated diene compound bonded through a 1,2-bond, a 3,4-bond (in a case other than farnesene), and a 3,13-bond (in a case of farnesene) to a peak derived from a structural unit derived from a conjugated diene compound bonded through a 1,4-bond (in a case other than farnesene) and a 1,13-bond (in a case of farnesene) using $^1$H-NMR.

The bonding configurations of the polymer block (a11) and the polymer block (a12) included in the block copolymer (P1) are not particularly limited, and may be linear, branched, radial, or a combination of two or more thereof. Among them, a configuration in which each block is linearly bonded is preferable, and when the polymer block (a11) is denoted by a11 and the polymer block (a12) is denoted by a12, a bonding configuration represented by $(a11\text{-}a12)_l$, $a11\text{-}(a12\text{-}a11)_m$, or $a12\text{-}(a11\text{-}a12)_n$ is preferable. Note that the subscripts "l", "n", and "m" each independently represent an integer greater than or equal to 1.

From viewpoints such as the adhesion, moldability, and handleability of a resultant pressure-sensitive adhesive composition, and the unwinding force of the resultant surface protection film, the bonding configuration is preferably such that blocks are included in the order of a polymer block (a11), a polymer block (a12), and a polymer block (a11) (i.e., two polymer blocks (a11) are bonded to both ends of the polymer block (a12)), and the styrenic block copolymer (A1) is preferably a hydrogenated product of a triblock copolymer represented by a11-a12-a11. In view of fluidity, the styrenic block copolymer (A1) may be a mixture of a hydrogenated product of a triblock copolymer represented by a11-a12-a11 and a hydrogenated product of a diblock copolymer represented by a11-a12. In this case, the mass ratio of the hydrogenated product of the triblock copolymer to the hydrogenated product of the diblock copolymer is preferably from 99:1 to 1:99, more preferably from 85:15 to 15:85, still more preferably from 80:20 to 20:80, and further more preferably from 75:25 to 25:75.

When the block copolymer (P1) includes two or more polymer blocks (a11), each polymer block (a11) may be a polymer block made up of the same structural unit or a polymer block made up of different structural units. Similarly, when the block copolymer (P1) includes two or more polymer blocks (a12), each polymer block (a12) may be a polymer block made up of the same structural unit or a polymer block made up of different structural units. For example, in two polymer blocks (a11) in a triblock copolymer represented by a11-a12-a11, the aromatic vinyl compounds used in each polymer block may be identical or different in species.

The content of the polymer block (a11) in the block copolymer (P1) is preferably from 8 to 45% by mass. When the content of the polymer block (a11) is within the range set forth above, a pressure-sensitive adhesive composition having an excellent adhesion and being excellent in moldability is easily obtained. In view of this, the content of the polymer block (a11) is more preferably from 11 to 40% by mass, still more preferably from 14 to 37% by mass, and further more preferably from 17 to 35% by mass. When the pressure-sensitive adhesive composition of the present invention includes two or more species of styrenic block copolymers (A1), it is preferable that the content of the polymer blocks (a11) in the at least one species of block copolymer (P1) is within the range set forth above, and it is more preferable that the polymer blocks (a11) in all the block copolymers (P1) are within the range set forth above.

The content of the polymer block (a12) in the block copolymer (P1) is preferably from 55 to 92% by mass, more preferably from 60 to 89% by mass, still more preferably from 63 to 86% by mass, and further more preferably from 65 to 83% by mass. When the pressure-sensitive adhesive composition of the present invention contains two or more species of styrenic block copolymers (A1), it is preferable that the content of the polymer blocks (a12) in the at least one species of block copolymer (P1) is within the range set forth above, and it is more preferable that the content of the polymer blocks (a12) in all the block copolymers (P1) are within the range set forth above.

Here, in the present specification, in a case where polymer blocks of the same species are linearly bonded through an inclusion such as an n-valent coupling agent, the entire bonded polymer block is treated as one polymer block. According to this, a polymer block, which should be originally represented by a11-X-a11 (X represents a coupling agent residue) in a strict sense, is denoted by a11 as a whole. Herein, since this type of polymer block containing a coupling agent residue is treated as described above, for example, a block copolymer containing a coupling agent residue, which should be represented by a11-a12-X-a12-a11 in a strict sense, is represented by a11-a12-a11 and is treated as an example of a triblock copolymer.

The total content of the polymer block (a11) and the polymer block (a12) in the block copolymer (P1) is preferably 80% by mass or more, more preferably 90% by mass or more, still more preferably 95% by mass or more, and further more preferably 100% by mass. When the pressure-sensitive adhesive composition of the present invention contains two or more species of styrenic block copolymers (A1), the total content of the polymer block (a11) and the polymer block (a12) in the whole mixture of the block copolymer (P1) is preferably in the range set forth above.

The styrenic block copolymer (A1) is a hydrogenated product of the block copolymer (P1). In view of heat resistance or of weather resistance, the hydrogenation ratio of the carbon-carbon double bond in the polymer block (a12) is preferably from 50 to 100% by mole, more preferably from 70 to 100% by mole, further preferably from 75 to 100% by mole, further more preferably from 80 to 100% by mole, particularly preferably from 85 to 100% by mole, and more particularly preferably from 90 to 100% by mole. When the pressure-sensitive adhesive composition of the present invention contains two or more species of styrenic block copolymers (A1), it is preferable that the hydrogenation ratio of the whole mixture of styrenic block copolymers (A1) is within the range set forth above, and it is more preferable that the hydrogenation ratios of all styrenic block copolymers (A1) are within the range set forth above.

Note that, the hydrogenation ratio can be calculated by measuring $^1$H-NMR of the block copolymer (P1) and of the styrenic block copolymer (A1) after hydrogenation.

The melt viscosity of the styrenic block copolymer (A1) measured at a temperature of 230°C and a shear rate of 121.6 (1/sec) in accordance with ISO 11443:1995 is preferably 25 (Pa·s) or more and less than 150 (Pa·s). When the styrenic block copolymer (A1) having a melt viscosity within such a range is contained in the pressure-sensitive adhesive composition, the moldability of the pressure-sensitive adhesive composition is further improved.

In view of the moldability and adhesion of the pressure-sensitive adhesive composition, the melt viscosity of the styrenic block copolymer (A1) is more preferably 30 (Pa·s) or more and 145 (Pa·s) or less, still more preferably 35 (Pa·s) or more and 140 (Pa·s) or less, further more preferably 40 (Pa·s) or more and 135 (Pa·s) or less, and particularly preferably 45 (Pa·s) or more and 80 (Pa·s) or less. When the pressure-sensitive adhesive composition of the present invention contains two or more species of the styrenic block copolymers (A1), the melt viscosity of at least one species of the styrenic block copolymers (A1) needs to be within the range set forth above, however, it is preferable that the melt viscosity of the whole mixture of the styrenic block copolymers (A1) (e.g., the sum of the melt viscosity for each copolymer multiplied by the respective weight fraction) is within the range set forth above, and it is more preferable that the melt viscosity of the entire mixture of the styrenic block copolymers (A1) is within the range set forth above and the melt viscosities of all the styrenic block copolymers (A1) are within the range set forth above.

The melt viscosity of the styrenic block copolymer (A1) measured at a temperature of 190°C and a shear rate of 121.6 (1/sec) in accordance with ISO 11443:1995 is preferably 200 (Pa·s) or more and less than 580 (Pa·s), and is preferably lower than the melt viscosity of the acrylic block copolymer (B) to be described later, measured at a temperature of 190°C and a shear rate of 121.6 (1/sec) in accordance with ISO 11443:1995. This further enhances the compatibility (miscibility) between the styrenic block copolymer (A1) and the acrylic block copolymer (B).

In view of compatibility (miscibility), the melt viscosity of the styrenic block copolymer (A1) is more preferably 210 (Pa·s) or more and 570 (Pa·s) or less, still more preferably 220 (Pa·s) or more and 560 (Pa·s) or less, and further more preferably 230 (Pa·s) or more and 560 (Pa·s) or less. When the pressure-sensitive adhesive composition of the present invention contains two or more species of the styrenic block copolymers (A1), the melt viscosity of at least one species of the styrenic block copolymers (A1) needs to be within the range set forth above, however, it is preferable that the melt viscosity of the whole mixture of the styrenic block copolymers (A1) (e.g., the sum of the melt viscosity for each copolymer multiplied by the respective weight fraction) is within the range set forth above, and it is more preferable that the melt viscosity of the entire mixture of the styrenic block copolymers (A1) is within the range set forth above and the melt viscosities of all the styrenic block copolymers (A1) are within the range set forth above.

The number average molecular weight (Mn) of the styrenic block copolymer (A1) is preferably 10,000 or more, more preferably 20,000 or more, still more preferably 30,000 or more, and is preferably 100,000 or less, more preferably 85,000 or less, still more preferably 70,000 or less in view of molding processability. When the pressure-sensitive adhesive composition of the present invention contains two or more species of styrenic block copolymers (A1), it is preferable that Mn of at least one species of the styrenic block copolymer (A1) is within the range set forth above, and it is more preferable that Mn's of all styrenic block copolymers (A1) are within the range set forth above.

The ratio of the weight average molecular weight (Mw) to the number average molecular weight (Mn), namely, the molecular weight distribution (Mw/Mn) of the styrenic block copolymer (A1) is preferably from 1 to 6.00, more preferably from 1 to 4.00, still more preferably from 1 to 3.00, further more preferably from 1 to 2.00, and particularly preferably from 1 to 1.30. When Mw/Mn is within the range set forth above, the styrenic block copolymer (A1) has a small variation in viscosity and is easy to handle. Note that, when the pressure-sensitive adhesive composition of the present invention contains two or more species of styrenic block copolymers (A1), it is preferable that Mw/Mn of at least one species of the styrenic block copolymer (A1) is within the range set forth above, and it is more preferable that Mw/Mn's of all the styrenic block copolymers (A1) are within the range set forth above.

Note that, the number average molecular weight (Mn) and the weight average molecular weight (Mw) of the styrenic block copolymer (A1) and the styrenic block copolymer (A2) to be described later are values obtained in terms of standard polystyrene by gel permeation chromatography, and the molecular weight distribution (Mw/Mn) is a value calculated from the values of Mw and Mn set forth above.

In addition to the polymer block (a11) and the polymer block (a12), the block copolymer (P1) may contain a polymer block made up of another monomer as long as the effect of the present invention is not inhibited.

Examples of such another monomer include: unsaturated hydrocarbon compounds such as propylene, 1-butene, 1-pentene, 4-methyl-1-pentene, 1-hexene, 1-octene, 1-decene, 1-undecene, 1-dodecene, 1-tridecene, 1-tetradecene, 1-pentadecene, 1-hexadecene, 1-heptadecene, 1-octadecene, 1-nonadecene, and 1-eicosene; and functional group-containing unsaturated compounds such as acrylic acid, methacrylic acid, methyl acrylate, methyl methacrylate, acrylonitrile, methacrylonitrile, maleic acid, fumaric acid, crotonic acid, itaconic acid, 2-acryloyl ethanesulfonic acid, 2-methacryloyl ethanesulfonic acid, 2-acrylamide-2-methylpropane sulfonic acid, 2-methacrylamide-2-methylpropane sulfonic acid, vinyl sulfonic acid, vinyl acetate, and methyl vinyl ether. These may be used singly or in combination of two or more kinds thereof.

When the block copolymer (P1) includes another polymer block, the content thereof is preferably 20% by mass or less, more preferably 10% by mass or less, and further more preferably 5% by mass.

[Method of producing styrenic block copolymer (A1)]

The styrenic block copolymer (A1) can be suitably produced, for example, by a polymerization step in which the block copolymer (P1) is obtained by anionic polymerization and a step of hydrogenating a carbon-carbon double bond in the polymer block (a12) in the block copolymer (P1).

(Polymerization Step)

The block copolymer (P1) can be produced by a method such as a solution polymerization method, or a method described in JP 2012-502135 A or JP 2012-502136 A. Among them, a solution polymerization method is preferable, and for example, there can be applied any of known methods including: an ionic polymerization method such as anionic polymerization or cationic polymerization; and a radical polymerization method. Among them, an anionic polymerization method is preferable. As the anionic polymerization method, a method of sequentially adding monomers such as an aromatic vinyl compound or a conjugated diene in a solvent (typified by a hydrocarbon), in the presence of a Lewis base (typified by an ether compound or a tertiary amine) as necessary, with an anionic polymerization initiator (typified by an organic alkali metal) to obtain a block copolymer (P1) is preferable.

The polymerization reaction can be stopped by adding an alcohol such as methanol or isopropanol as a polymerization terminator. The resultant polymerization reaction liquid is poured into a poor solvent such as methanol to precipitate the block copolymer (P1), or the polymerization reaction liquid is washed with water, then separation followed by drying, so that the block copolymer (P1) can be isolated.

The block copolymer (P1) may be produced by a method in which polymer blocks such as the polymer block (a11) and the polymer block (a12) are polymerized in this order, and terminals of the polymer blocks (a12) are coupled to each other with a coupling agent typified by a compound such as a halogenated silane compound or an alkoxysilyl group-containing compound.

The block copolymer (P1) may be modified prior to the hydrogenation step described later. Examples of the functional group that can be introduced include: an amino group, an alkoxysilyl group, a hydroxyl group, an epoxy group, a carboxyl group, a carbonyl group, a mercapto group, an isocyanate group, and an acid anhydride group.

Examples of the method of modifying the block copolymer (P1) include: a method in which a coupling agent typified by tin tetrachloride capable of reacting with a polymerization active terminal, a polymerization terminal modification agent typified by 4,4'-bis(diethylamino)benzophenone, or other modification agents described in JP 2011-132298 A is added prior to adding a polymerization terminator. There is also exemplified a method in which maleic anhydride, for example, is grafted to the copolymer after isolation.

(Hydrogenation step)

The block copolymer (P1) obtained by the above-mentioned method or the modified block copolymer (P1) is subjected to a hydrogenation step, thereby enabling to afford the styrenic block copolymer (A1). As the hydrogenation process, a known process can be used. For example, a Ziegler catalyst, a metallocene-based catalyst, or a hydrogenation catalyst typified by palladium carbon is added to a solution in which the block copolymer (P1) is dissolved in a solvent that does not affect the hydrogenation reaction, and then the hydrogenation reaction is allowed to proceed at an appropriate hydrogen pressure and reaction temperature to give the styrenic block copolymer (A1).

<Acrylic block copolymer (B)>

The acrylic block copolymer (B) includes one or more polymer blocks (b11) containing a structural unit derived from an acrylic acid ester and one or more polymer blocks (b12) containing a structural unit derived from a methacrylic acid ester, and has a number average molecular weight (Mn) of 60,000 or more and 300,000 or less. (Condition (4))

The pressure-sensitive adhesive composition of the present invention may contain one species of the acrylic block copolymer (B) singly or two or more species thereof.

[Polymer block (b11)]

The polymer block (b11) contains a structural unit derived from an acrylic acid ester. Such acrylic acid esters are roughly classified into: acrylic acid esters (hereinafter, referred to as acrylic acid ester (b11-1)) represented by the general formula $CH_2= CH\text{-}COOR^1$ (X) (In the formula (X), $R^1$ represents an organic group with 4 to 6 carbon atoms); acrylic acid esters (hereinafter, referred to as acrylic acid ester (b11-2)) represented by the general formula $CH_2=CH\text{-}COOR^2$ (Y) (In the formula (Y), $R^2$ represents an organic group with 7 to 12 carbon atoms); and acrylic acid esters other than these.

Examples of the organic group with 4 to 6 carbon atoms represented by $R^1$ include: alkyl groups with 4 to 6 carbon atoms, such as butyl group, amyl group (pentyl group), hexyl group, and cyclohexyl group; aromatic ring groups with 6 carbon atoms, such as phenyl group; organic groups containing elements such as oxygen other than carbon, having a total number of carbon atoms of 4 to 6, such as ethoxyethyl group, tetrahydrofurfuryl group, and diethylaminoethyl group. Examples of the acrylic acid ester (b11-1) include: acrylic acid esters having no functional group, such as n-butyl acrylate, isobutyl acrylate, sec-butyl acrylate, tert-butyl acrylate, amyl acrylate, isoamyl acrylate, n-hexyl acrylate, cyclohexyl acrylate, and phenyl acrylate; and acrylic acid esters having a functional group, such as ethoxyethyl acrylate, tetrahydrofurfuryl acrylate, and diethylaminoethyl acrylate.

Examples of the organic group with 7 to 12 carbon atoms represented by $R^2$ include: alkyl groups with 7 to 12 carbon atoms, such as ethylhexyl group, octyl group, decyl group, isobornyl group, and lauryl group; aromatic ring groups with 7 to 12 carbon atoms, such as benzyl group; and organic groups containing an element such as oxygen other than carbon, having a total number of carbon atoms of 7 to 12, such as phenoxyethyl group. Examples of the acrylic acid ester (b11-2) include: acrylic acid esters having no functional groups, such as 2-ethylhexyl acrylate, n-octyl acrylate, isooctyl acrylate, decyl acrylate, isobornyl acrylate, lauryl acrylate, and benzyl acrylate; and acrylic acid esters having a functional group, such as phenoxyethyl acrylate.

Examples of the acrylic acid ester other than the acrylic acid ester (b11-1) and the acrylic acid ester (b11-2) include: acrylic acid esters having no functional groups, such as methyl acrylate, ethyl acrylate, isopropyl acrylate, n-propyl acrylate, and octadecyl acrylate; and acrylic acid esters having a functional group, such as methoxyethyl acrylate, 2-hydroxyethyl acrylate, 2-aminoethyl acrylate, and glycidyl acrylate.

Among the acrylic acid esters (b11-1), in view of the flexibility of the resultant pressure-sensitive adhesive composition, an acrylic acid ester having no functional groups is preferable, and n-butyl acrylate is more preferable.

The ratio [(b11-1)/(b11) × 100] of the structural unit (b11-1) derived from the acrylic acid ester (b11-1) contained in the polymer block (b11) is preferably from 10 to 100% by mass, more preferably from 30 to 100% by mass, still more preferably from 50 to 100% by mass, or may be 100% by mass. When the content is within the range set forth above, the pressure-sensitive adhesive composition of the present invention is excellent in molding processability. The content of the structural unit derived from the acrylic acid ester (b11-1) or of the polymer block (b11) can be determined by $^1$H-NMR, and specifically, it can be determined by the method described in Examples.

Among the acrylic acid esters (b11-2), in terms of the phase separation between the polymer block (b12) and the polymer block (b11) becoming clearer and the resultant pressure-sensitive adhesive composition exhibiting a high cohesion, acrylic acid esters having no functional groups are preferable, and 2-ethylhexyl acrylate, n-octyl acrylate, isooctyl acrylate, and benzyl acrylate are more preferable. Moreover, 2-ethylhexyl acrylate is more preferable in terms of the resultant pressure-sensitive adhesive composition exhibiting stable durability over a wide range of temperature.

As the acrylic acid ester set forth above, one kind thereof may be used singly, or two or more kinds thereof may be used in combination. The content of the structural unit derived from an acrylic acid ester in the polymer block (b11) is preferably 60% by mass or more, more preferably 80% by mass or more, still more preferably 90% by mass or more, or may be 100% by mass.

Among the acrylic acid esters set forth above, in terms of the compatibility (miscibility) between the acrylic block copolymer (B) and the styrenic block copolymer (A1) being enhanced and stable adhesion and molding processability being exhibited, the acrylic acid ester is preferably at least one species selected from the acrylic acid ester (b11-1) and the acrylic acid ester (b11-2), and is more preferably the acrylic acid ester (b11-1).

In addition, from the viewpoint described above, the acrylic acid ester to be the structural unit derived from the acrylic acid ester contained in the polymer block (b11) is a configuration preferably containing at least one species selected from the acrylic acid ester (b11-1) and at least one species selected from the acrylic acid ester (b11-2). In such a preferred configuration, the mass ratio (b11-1)/(b11-2) of the structural unit derived from the acrylic acid ester (b11-1) to the structural unit derived from the acrylic acid ester (b11-2) is preferably from 90/10 to 10/90, and more preferably from 60/40 to 40/60.

When (b11-1)/(b11-2) is within the range set forth above, the compatibility (miscibility) between the acrylic block copolymer (B) and the styrenic block copolymer (A1) is further enhanced, and more stable adhesion and molding processability can be exhibited. Note that the mass ratio of the structural unit derived from the acrylic acid ester (b11-1) to the structural unit derived from the acrylic acid ester (b11-2) can be determined by $^1$H-NMR measurement.

Examples of the combination of the acrylic acid ester (b11-1) and the acrylic acid ester (b11-2) used in the polymer block (b11) include: n-butyl acrylate/2-ethylhexyl acrylate. In this occasion, the acrylic acid ester (b11-1) and the acrylic acid ester (b11-2) to be used are more preferably chosen such that the difference in solubility parameter between the acrylic acid ester (b11-1) and the acrylic acid ester (b11-2) is from 0.3 to 2.5 $(MPa)^{1/2}$. Note that, such solubility parameters can be calculated by the method described in "POLYMER HANDBOOK Forth Edition", VII, pages 675 to 714 (Wiley Interscience, Inc., published in 1999) and "Polymer Engineering and Science", 1974, volume 14, pages 147 to 154.

When the acrylic block copolymer (B) contains two or more polymer blocks (b11), the combination of the acrylic acid esters as a component in the polymer blocks (b11) and the ratio thereof may be the same or different from each other.

When the polymer block (b11) is a copolymer containing both a structural unit derived from the acrylic acid ester (b11-1) and a structural unit derived from the acrylic acid ester (b11-2), the polymer block (b11) may be made up of a random copolymer of the acrylic acid ester (b11-1) and the acrylic acid ester (b11-2), may be made up of a block copolymer thereof, or may be made up of a gradient copolymer thereof, but typically is desirable to be made up of a random copolymer thereof. When the acrylic block copolymer (B) contains two or more polymer blocks (b11), the structures of the polymer blocks (b11) may be the same or different from each other. The ratio of the total units of the structural units derived from the acrylic acid esters (b11-1) and (b11-2) contained in the polymer block (b11) is preferably 60% by mass or more, more preferably 80% by mass or more, still more preferably 90% by mass or more, or may be 100% by mass in the polymer block (b11).

The glass transition temperature of the polymer block (b11) is preferably from -100 to 30°C, more preferably from -80 to 10°C, still more preferably from -70 to 0°C, and further more preferably from -60 to -10°C. When the glass transition temperature of the polymer block (b11) is within this range, the pressure-sensitive adhesive composition of the present invention containing the acrylic block copolymer (B) can exhibit an excellent adhesion at normal temperature.

[Polymer block (b12)]

The polymer block (b12) contains a structural unit derived from a methacrylic acid ester. Examples of the methacrylic acid ester include: methacrylic acid esters having no functional group, such as methyl methacrylate, ethyl methacrylate, isopropyl methacrylate, n-propyl methacrylate, n-butyl methacrylate, isobutyl methacrylate, sec-butyl methacrylate, tert-butyl methacrylate, n-hexyl methacrylate, cyclohexyl methacrylate, 2-ethylhexyl methacrylate, n-octyl methacrylate, lauryl methacrylate, tridecyl methacrylate, stearyl methacrylate, isobornyl methacrylate, phenyl methacrylate, and benzyl methacrylate; and methacrylic acid esters having a functional group, such as methoxyethyl methacrylate, ethoxyethyl methacrylate, diethylaminoethyl methacrylate, 2-hydroxyethyl methacrylate, 2-aminoethyl methacrylate, glycidyl methacrylate, and tetrahydrofurfuryl methacrylate.

Among them, in view of improving the heat resistance and durability of the resultant pressure-sensitive adhesive composition, a methacrylic acid esters having no functional group is preferable, methyl methacrylate, ethyl methacrylate, tert-butyl methacrylate, cyclohexyl methacrylate, 2-ethylhexyl methacrylate, isobornyl methacrylate, phenyl methacrylate, and benzyl methacrylate are more preferable, and in view of the phase separation between the polymer block (b11) and the polymer block (b12) becoming clearer, and the mechanical properties of the pressure-sensitive adhesive composition being improved, methyl methacrylate is still more preferable. The polymer block (b12) may be made up of one species of these methacrylic acid esters, or may be made up of two or more species thereof. In addition, the acrylic block copolymer (B) preferably includes two or more polymer blocks (b12) in view of enhancing adhesion durability. In that case, the polymer blocks (b12) may be the same or different from each other.

The glass transition temperature of the polymer block (b12) is preferably from 80 to 140°C, more preferably from 90 to 130°C, and still more preferably from 100 to 120°C. When the glass transition temperature is within this range, this polymer block (b12) acts as a physical pseudo-crosslinking point of the acrylic block copolymer (B) at a normal service temperature of the pressure-sensitive adhesive composition, and the resulting pressure sensitive adhesive composition is more excellent in adhesion, durability and heat resistance.

The polymer block (b11) may contain a structural unit derived from a methacrylic acid ester as long as the effect of the present invention is not impaired, and the polymer block (b12) may contain a structural unit derived from an acrylic acid ester as long as the effect of the present invention is not impaired. The polymer blocks (b11) and (b12) may contain a structural unit derived from a monomer other than the (meth)acrylic acid ester as necessary. Examples of such other monomers include: vinyl monomers having a carboxyl group, such as (meth)acrylic acid, crotonic acid, maleic acid, and fumaric acid; aromatic vinyl monomers such as styrene, $\alpha$-methylstyrene, p-methylstyrene, and m-methylstyrene; conjugated diene-based monomers such as butadiene and isoprene; olefinic monomers such as ethylene, propylene, isobutene, and octene; lactone-based monomers such as $\varepsilon$-caprolactone and valerolactone; (meth)acrylamide, (meth)acrylonitrile, maleic anhydride, vinyl acetate, vinyl chloride, and vinylidene chloride. When these other monomers are used, they are used in an amount of preferably 40% by mass or less, more preferably 20% by mass or less, and still more preferably 10% by mass or less relative to the total mass of the monomers used in each polymer block.

The acrylic block copolymer (B) used in the present invention may include another polymer block as necessary in addition to the polymer block (b11) and the polymer block (b12). Examples of such other polymer block include: polymer blocks or copolymer blocks containing a structural unit derived from a monomer such as styrene, $\alpha$-methylstyrene, p-methylstyrene, m-methylstyrene, acrylonitrile, methacrylonitrile, ethylene, propylene, isobutene, butadiene, isoprene, octene, vinyl acetate, maleic anhydride, vinyl chloride, or vinylidene chloride; polymer blocks including polyethylene terephthalate, polylactic acid, polyurethane, or polydimethylsiloxane. The polymer block also includes a hydrogenated product of a polymer block containing a structural unit derived from a conjugated diene compound such as butadiene or isoprene.

When a polymer block (b11) is denoted by b11, a polymer block (b11) having a structure different from that of the polymer block (b11) (provided that the polymer block (b12) is excluded) is denoted by b'11, and the polymer block (b12) is denoted by b12, the acrylic block copolymer (B) is preferably a polymer block represented by the general formula:

$$(b12-b11)_n$$

$$(b12-b11)_n-b12$$

$$b11-(b12-b11)_n$$

$$(b12-b11)_n-b'11$$

$$(b12-b11)_n-Z,$$

or

$$(b11-b12)_n-Z$$

(wherein, n represents an integer from 1 to 30, Z represents a coupling site (a coupling site after the coupling agent reacts with the polymer terminal to form a chemical bond), and "-" represents a bond of each polymer block. Note that, when a plurality of b11 and b12 are included in the formula, they may be polymer blocks having the same structure or polymer blocks having different structures). As used herein: the term "different structure" means a structure different in at least one of: a monomer unit as a component in a polymer block; a molecular weight; a molecular weight distribution; stereoregularity; and, when a plurality of monomer units are included, a ratio of each monomer unit and a configuration of copolymerization (random, gradient, or block).

The value of n is preferably from 1 to 15, more preferably from 1 to 8, and still more preferably from 1 to 4. Among the structures set forth above, in view of the pressure-sensitive adhesive composition being excellent in durability, the block copolymer is preferably a linear block copolymer represented by $(b12-b11)_n$, $(b12-b11)_n-b12$, $b11-(b12-b11)_n$, or $(b12-b11)_n-b'11$, is more preferably a diblock copolymer represented by b12-b11, a triblock copolymer represented by the formula: b12-b11-b'11 including blocks in the order of a polymer block (b12), the polymer block (b11), and the polymer block (b'11), or a triblock copolymer represented by the formula: b12-b11-b12 including blocks in the order of a polymer block (b12), the polymer block (b11), and the polymer block (b12), and is further preferably a triblock copolymer represented by the formula: b12-b11-b12.

The acrylic block copolymer (B) in the present invention may be a mixture of a diblock copolymer and a triblock copolymer, in such a case, a mixture of a triblock copolymer represented by b12-b11-b'11 and a diblock copolymer represented by b12-b11, a mixture of a triblock copolymer represented by b12-b11-b12 and a diblock copolymer represented by b12-b11 are more preferable, and a mixture of a triblock copolymer represented by b12-b11-b12 and a diblock copolymer represented by b12-b11 is still more preferable.

The melt viscosity of the acrylic block copolymer (B) measured at a temperature of 230°C and a shear rate of 121.6 (1/sec) in accordance with ISO 11443:1995 is preferably 150 (Pa·s) or more and less than 400 (Pa·s). When the acrylic block copolymer (B) having a melt viscosity in such a range is contained in the pressure-sensitive adhesive composition of the present invention, there can be obtained a pressure-sensitive adhesive composition being more excellent in film formability and exhibiting more excellent adhesion to a base material including a high-polarity resin such as a PMMA plate.

In view of the moldability of the pressure-sensitive adhesive composition and the compatibility (miscibility) with the styrenic block copolymer (A1), the melt viscosity of the acrylic block copolymer (B) is more preferably 151 (Pa·s) or more and 380 (Pa·s) or less, still more preferably 152 (Pa·s) or more and 360 (Pa·s) or less, and further more preferably 153 (Pa·s) or more and 340 (Pa·s) or less. When the pressure-sensitive adhesive composition of the present invention contains two or more species of acrylic block copolymers (B), the melt viscosity of the whole mixture (e.g., the sum of the melt viscosity for each copolymer multiplied by the respective weight fraction) of these copolymers is preferably in the range set forth above.

The melt viscosity of the acrylic block copolymer (B) measured at a temperature of 190°C and a shear rate of 121.6 (1/sec) in accordance with ISO 11443:1995 is preferably 580 (Pa·s) or more and less than 1200 (Pa·s), and is preferably lower than the melt viscosity of the styrenic block copolymer (A1) measured at a temperature of 190°C and a shear rate of 121.6 (1/sec) in accordance with ISO 11443:1995. This further enhances the compatibility (miscibility) between the styrenic block copolymer (A1) and the acrylic block copolymer (B) .

In view of compatibility (miscibility), the melt viscosity of the acrylic block copolymer (B) is more preferably 590 (Pa·s) or more and 1100 (Pa·s) or less, still more preferably 600 (Pa·s) or more and 1000 (Pa·s) or less, and further more preferably 610 (Pa·s) or more and 950 (Pa·s) or less. When the pressure-sensitive adhesive composition of the present invention contains two or more species of acrylic-based block copolymers (B), at least one species of acrylic-based block copolymer (B) needs to have a melt viscosity within the range set forth above, but it is preferable that the melt viscosity of the whole mixture (e.g., the sum of the melt viscosity for each copolymer multiplied by the respective weight fraction) of these acrylic-based block copolymers (B) is within the range set forth above, and it is more preferable that the melt viscosity of the whole mixture of these acrylic-based block copolymers (B) is within the range set forth above, and the melt viscosities of all the acrylic-based block copolymers (B) are within the range set forth above.

The number average molecular weight (Mn) of the acrylic block copolymer (B) is 60,000 or more and 300,000 or less. By using the acrylic block copolymer (B) having a melt viscosity within this range, the resulting pressure-sensitive adhesive composition is excellent in moldability and film formability. Among them, in view of improving the fluidity of the pressure-sensitive adhesive composition obtained in the present invention, the Mn is more preferably from 65, 000 to 270,000, still more preferably from 70,000 to 250,000. When the pressure-sensitive adhesive composition of the present invention contains two or more species of acrylic block copolymers (B), it is preferable that Mn of at least one species of the acrylic block copolymer (B) is within the range set forth above, and it is more preferable that Mn's of all the acrylic block copolymers (B) are within the range set forth above.

The molecular weight distribution (Mw/Mn) of the acrylic block copolymer (B) is preferably from 1 to 1.40. In view of the resultant pressure-sensitive adhesive composition being excellent in durability, Mw/Mn is more preferably from 1 to 1.35, still more preferably from 1 to 1.30, further more preferably from 1.00 to 1.25, and particularly preferably from 1 to 1.20. When the pressure-sensitive adhesive composition of the present invention contains two or more species of acrylic block copolymers (B), it is preferable that Mw/Mn of at least one species of the acrylic block copolymer (B) is within the range set forth above, and it is more preferable that Mw/Mn's of all the acrylic block copolymers (B) are within the range set forth above.

Note that the number average molecular weight (Mn) and the weight average molecular weight (Mw) of the acrylic block copolymer (B) are values determined in terms of standard polystyrene by gel permeation chromatography, and the molecular weight distribution (Mw/Mn) is a value calculated from the values of Mw and Mn.

The content of the polymer block (b11) in the acrylic block copolymer (B) is preferably from 70 to 95% by mass. When the content of the polymer block (b11) is within the range set forth above, the pressure-sensitive adhesive composition is imparted with flexibility, and exhibits excellent adhesion to a base material including a high-polarity resin such as a PMMA plate. In view of imparting flexibility, the content of the polymer block (b11) is more preferably from 72 to 93% by mass, and still more preferably from 74 to 91% by mass. When the pressure-sensitive adhesive composition of the present invention contains two or more species of acrylic block copolymers (B), it is preferable that the content of the polymer blocks (b11) of at least one species of the acrylic block copolymer (B) is within the range set forth above, and it is more preferable that the contents of the polymer blocks (b11) of all the acrylic block copolymers (B) are within the range set forth above.

The content of the polymer block (b12) in the acrylic block copolymer (B) is preferably from 5 to 30% by mass. When the content of the polymer block (b12) is within the range set forth above, the surface protection film of the present invention has more excellent unwinding force, and exhibits more excellent adhesion to a PMMA plate. In view of improving the unwinding force, the content of the polymer block (b12) is more preferably from 7 to 28% by mass, and still more preferably from 9 to 26% by mass. When the pressure-sensitive adhesive composition of the present invention contains two or more species of acrylic block copolymers (B), it is preferable that the content of the polymer blocks (b12) of at least one species of the acrylic block copolymer (B) is within the range set forth above, and it is more preferable that the contents of the polymer blocks (b12) of all the acrylic block copolymers (B) are within the range set forth above.

The contents of the polymer block (b11) and of the polymer block (b12) can be determined by $^1$H-NMR, and specifically, can be determined by the method described in Examples.

[Method of producing acrylic block copolymer (B)]

The method of producing the acrylic block copolymer (B) is not particularly limited as long as a desired polymer is obtained, and a method according to a known method can be adopted. In general, as a method of obtaining a block copolymer having a narrow molecular weight distribution, there is adopted a method of living polymerization of monomers to be structural units. Examples of the living polymerization method like this include: a living polymerization method using an organic rare earth metal complex as a polymerization initiator (refer to JP H06-93060 A); a living anionic polymerization method using an organic alkali metal compound as a polymerization initiator in the presence of a mineral acid salt such as a salt of an alkali metal or of an alkaline earth metal (refer to JP H05-507737 A); a living anionic polymerization method using an organic alkali metal compound as a polymerization initiator in the presence of an organic aluminum compound (refer to JP H11-335432 A); and an atom transfer radical polymerization method (ATRP) (refer to Macromolecular Chemistry and Physics, 2000, Volume 201, pp. 1108-1114).

Among the production methods set forth above, the living anionic polymerization method using an organic alkali metal compound as a polymerization initiator in the presence of an organic aluminum compound is preferable since the resulting block copolymer has high transparency, the amount of residual monomers is small and odor is suppressed, and air bubbles can be suppressed from generating when molding the pressure-sensitive adhesive composition. Moreover, this method is also preferable in terms of the structural unit derived from a methacrylic acid ester becoming a high syndiotactic molecular structure and there being an effect of enhancing the heat resistance of the resulting pressure-sensitive adhesive composition. In the above-described living anionic polymerization method using an organic alkali metal compound as a polymerization initiator in the presence of an organic aluminum compound, polymerization is typically carried out in an organic solvent such as a hydrocarbon. Moreover, an ether compound or a nitrogen-containing organic compound, for example, is added to the reaction system as needed.

In the pressure-sensitive adhesive composition of the present invention, the styrenic block copolymer (A1) and the acrylic block copolymer (B) contained in the composition need to further satisfy the following conditions.

The melt viscosity of the styrenic block copolymer (A1) measured at a temperature of 230°C and a shear rate of 121.6 (1/sec) in accordance with ISO 11443:1995 is lower than the melt viscosity of the acrylic block copolymer (B) measured under the same conditions.

(The melt viscosity (at a temperature of 230°C and a shear rate of 121.6 (1/sec)) of styrenic block copolymer (A1)) < the melt viscosity (at a temperature of 230°C and a shear rate of 121.6 (1/sec)) of acrylic block copolymer (B) (Condition (1))

In the pressure-sensitive adhesive composition of the present invention, the mass ratio [(A1):(B)] of the content of the styrenic block copolymer (A1) to the content of the acrylic block copolymer (B) is from 10:90 to 90:10. (Condition (2))

In the pressure-sensitive adhesive composition of the present invention, it is necessary to satisfy the above-mentioned conditions (1) and (2) in addition to the conditions (3) and (4).

When these conditions are satisfied, there is obtained a pressure-sensitive adhesive composition that exhibits the effects of the present invention. Details of the reason are not clear, but it is presumed as follows. That is, the acrylic block copolymer and the styrenic block copolymer are typically not very well in compatibility (miscibility) due to the difference in their polarity, and for example, it is difficult to obtain a mixture excellent in transparency. However, when the styrenic block copolymer (A1) having a melt viscosity lower than that of the acrylic block copolymer (B) is combined with the acrylic block copolymer (B) and further mixed at a specific mass ratio, they are assumed to be easily mixed physically and so that the compatibility (miscibility) is improved.

In view of further improving the compatibility (miscibility), that the ratio (B)/(A1) (at a temperature of 230°C and a shear rate of 121.6 (1/sec)) of the melt viscosity of the acrylic block copolymer (B) to the melt viscosity of the styrenic block copolymer (A1) measured at a temperature of 230°C and a shear rate of 121.6 (1/sec) is preferably more than 1.0 and 10.0 or less (1 < (B)/(A1) (at a temperature of 230°C and a shear rate of 121.6 (1/sec)) ≤ 10.0: Condition (1-1)), and it is more preferably more than 1.0 and 5.0 or less (1 < (B)/(A1) (at a temperature of 230°C and a shear rate of 121.6 (1/sec)) ≤ 5.0: Condition (1-2)). Note that when a mixture of two or more species of the styrenic block copolymers (A1) are used, the melt viscosity of the whole mixture (e.g., the sum of the melt viscosity for each copolymer multiplied by the respective weight fraction) is preferably in the above-mentioned range. The same applies to the case of using a mixture of two or more species of the acrylic block copolymer (B).

In view of further improving the compatibility (miscibility), the mass ratio [(A1):(B)] is more preferably from 85:15 to 15:85, still more preferably from 75:25 to 25:75, further more preferably from 70:30 to 30:70, and particularly preferably from 65:35 to 35:65. When the mass ratio [(A1):(B)] is within the range set forth above, the adhesion to a base material is easily maintained even when the base material contains a low-polarity resin such as polyolefin, and even when a laminate (e.g., a surface protection film) containing the pressure-sensitive adhesive composition of the present invention is used onto a high-polarity adherend (e.g., a polymethyl methacrylate (PMMA) plate), the adhesion to the adherend is more easily maintained.

In the pressure-sensitive adhesive composition of the present invention, the styrenic block copolymer (A1) and the acrylic block copolymer (B) contained in the composition preferably further satisfy the following conditions. The melt viscosity of the styrenic block copolymer (A1) measured at a temperature of 190°C and a shear rate of 121.6 (1/sec) in accordance with ISO 11443:1995 is lower than the melt viscosity of the acrylic block copolymer (B) measured under the same conditions.

(The melt viscosity (at a temperature of 190°C and a shear rate of 121.6 (1/sec)) of styrenic block copolymer (A1) < the melt viscosity (at a temperature of 190°C and a shear rate of 121.6 (1/sec)) of acrylic block copolymer (B) (Condition (5))

When the styrenic block copolymer (A1) and the acrylic block copolymer (B) have the melt viscosities satisfying the conditions set forth above, kneading unevenness due to temperature variation during melt molding can be more efficiently suppressed, and the compatibility (miscibility) between the styrenic block copolymer (A1) and the acrylic block copolymer (B) is more easily improved.

In view of further improving the compatibility (miscibility), the ratio (B)/(A1) (at a temperature of 190°C and a shear rate of 121.6 (1/sec)) of the melt viscosity of the acrylic block copolymer (B) to the melt viscosity of the styrenic block copolymer (A1) measured at a temperature of 190°C and a shear rate of 121.6 (1/sec) is preferably 1.1 or more and 10.0 or less (1.1 ≤ (B)/(A1) (at a temperature of 190°C and a shear rate of 121.6 (1/sec)) ≤ 10.0: Condition (5-1)), and more preferably 1.1 or more and 5.0 or less (1.1 ≤ (B)/(A1) (at a temperature of 190°C and a shear rate of 121.6 (1/sec)) ≤ 5.0: Condition (5-2)). Note that when a mixture of two or more species of the styrenic block copolymers (A1) are used, the melt viscosity of the whole mixture (e.g., the sum of the melt viscosity for each copolymer multiplied by the respective weight fraction) is preferably in the above-mentioned range. The same applies to the case of using a mixture of two or more species of the acrylic block copolymer (B).

When the total content of the styrenic block copolymer (A1) and the acrylic block copolymer (B) in the pressure-sensitive adhesive composition of the present invention is 25% by mass or more, the effect of the present invention can be exhibited, but in view of achieving the effect of the present invention in a well-balanced manner, the total content is preferably 35% by mass or more, more preferably 40% by mass or more, further preferably 45% by mass or more, even more preferably 50% by mass or more, further more preferably 60% by mass or more, and preferably 100% by mass or less, or may be 100% by mass.

<Styrenic block copolymer (A2)>

The pressure-sensitive adhesive composition of the present invention may contain a styrenic block copolymer (A2) other than the styrenic block copolymer (A1). The styrenic block copolymer (A2) desirably satisfies the following conditions (6) to (8). When the pressure-sensitive adhesive composition of the present invention further contains the styrenic block copolymer (A2) satisfying the following condition (6) in addition to the following conditions (7) and (8), the flexibility of the resultant pressure-sensitive adhesive composition can be easily retained, the melt viscosity thereof is more easily adjusted, particularly the molding (film formation) of the laminate is facilitated, so that the pressure-sensitive adhesive composition that more effectively exhibits the effects of the present invention is obtained.

The melt viscosity of the styrenic block copolymer (A2) measured at a temperature of 230°C and a shear rate of 121.6 (1/sec) in accordance with ISO 11443:1995 is higher than the melt viscosity of the acrylic block copolymer (B) measured under the same conditions.

(The melt viscosity (at a temperature of 230°C and a shear rate of 121.6 (1/sec)) of the acrylic block copolymer (B) < the melt viscosity (at a temperature of 230°C and a shear rate of 121.6 (1/sec)) of styrenic block copolymer (A2)) (Condition (6))

The styrenic block copolymer (A2) is a hydrogenated product of a block copolymer (P2) including one or more polymer blocks (a21) containing a structural unit derived from an aromatic vinyl compound and one or more polymer blocks (a22) containing a structural unit derived from a conjugated diene. (Condition (7))

The content of the polymer block (a21) is from 5 to 25% by mass. (Condition (8))

The pressure-sensitive adhesive composition of the present invention may contain one species of the styrenic block copolymer (A2) singly, or may contain two or more species of the styrenic block copolymers (A2).

[Polymer block (a21)]

The polymer block (a21) included in the block copolymer (P2) contains a structural unit derived from an aromatic vinyl compound. Specific examples and preferable examples of the aromatic vinyl compound are the same as those in the case of the polymer block (a11) included in the block copolymer (P1). As these aromatic vinyl compounds, one kind thereof may be used singly, or two or more kinds thereof may be used in combination.

The polymer block (a21) may contain a structural unit derived from a monomer other than the aromatic vinyl compound, for example, a structural unit derived from another monomer such as a monomer as a component in the polymer block (a22) described later. However, the content of the structural unit derived from the aromatic vinyl compound in the polymer block (a21) is preferably 60% by mass or more, more preferably 70% by mass or more, still more preferably 80% by mass or more, further more preferably 90% by mass or more, and particularly preferably 100% by mass.

[Polymer block (a22)]

The polymer block (a22) included in the block copolymer (P2) contains a structural unit derived from a conjugated diene. Specific examples and preferable examples of the conjugated diene are the same as those in the case of the polymer block (a12) included in the block copolymer (P1). One kind of these conjugated dienes may be used singly, or two or more kinds thereof may be used in combination.

The polymer block (a22) may contain a structural unit derived from a monomer other than the conjugated diene, for example, a structural unit derived from another monomer such as a monomer as a component in the polymer block (a21) described above. However, the content of the structural unit derived from a conjugated diene in the polymer block (a22) is preferably 60% by mass or more, more preferably 70% by mass or more, still more preferably 80% by mass or more, further more preferably 90% by mass or more, and particularly preferably 100% by mass.

(The degree of vinylation of polymer block (a22))

The degree of vinylation of the structural unit derived from a conjugated diene included in the polymer block (a22) is not particularly limited, but the degree of vinylation is preferably from 1 to 95% by mole, more preferably from 2 to 90% by mole, still more preferably from 3 to 85% by mole, and particularly preferably from 4 to 80% by mole. Note that, when the styrenic block copolymer is produced by anionic polymerization described later, the degree of vinylation can be adjusted to a desired value by controlling the conditions such as the species of a solvent to use, the species and addition amount of a Lewis base to use as necessary, or the polymerization temperature.

The bonding configuration of the polymer block (a21) and the polymer block (a22) included in the block copolymer (P2) is not particularly limited, and may be linear, branched, radial, or a combination of two or more thereof. Among them, a configuration in which each block is linearly bonded is preferable, and when the polymer block (a21) is denoted by a21 and the polymer block (a22) is denoted by a22, a bonding configuration represented by $(a21\text{-}a22)_l$, $a21\text{-}(a22\text{-}a21)_m$, or $a22\text{-}(a21\text{-}a22)_n$ is preferable. Note that the subscripts "l", "n", and "m" each independently represent an integer greater than or equal to 1.

From the viewpoints such as the adhesion, moldability, and handleability of the resultant pressure-sensitive adhesive composition, and the unwinding force of the resultant surface protection film, the bonding configuration is preferably such that blocks are included in the order of a polymer block (a21), a polymer block (a22), and a polymer block (a21) (two polymer blocks (a22) are bonded to both ends of the polymer block (a21)), and the styrenic block copolymer (A2) is preferably a hydrogenated product of a triblock copolymer represented by a21-a22-a21. Alternatively, in view of fluidity, the styrenic block copolymer (A2) may be a mixture of a hydrogenated product of a triblock copolymer represented by a21-a22-a21 and a hydrogenated product of a diblock copolymer represented by a21-a22. In this case, the mass ratio of the hydrogenated product of the triblock copolymer to the hydrogenated product of the diblock copolymer is typically from 99:1 to 1:99, preferably from 85:15 to 15:85, more preferably from 80:20 to 20:80, and still more preferably from 75:25 to 25:75.

When the block copolymer (P2) includes two or more polymer blocks (a21), these polymer blocks (a21) may be polymer blocks made up of the same structural unit or polymer blocks made up of different structural units. Similarly, when the block copolymer (P2) includes two or more polymer blocks (a22), each polymer block may be a polymer block made up of the same structural unit or a polymer block made up of different structural units. For example, in two polymer blocks (a21) in a triblock copolymer represented by a21-a22-a21, aromatic vinyl compounds used in each polymer block may be the same or different in species.

As described in Condition (8), the content of the polymer block (a21) in the block copolymer (P2) is preferably from 5 to 25% by mass. When the content of the polymer block (a21) is within the range set forth above, there can be obtained a pressure-sensitive adhesive composition exhibiting more excellent adhesion and being more excellent in moldability. In view of providing more excellent adhesion and more excellent moldability, the content of the polymer block (a21) is more preferably from 6 to 24% by mass, still more preferably from 7 to 23% by mass, and further more preferably from 8 to 22% by mass. When the pressure-sensitive adhesive composition of the present invention contains two or more species of the styrenic block copolymers (A2), it is preferable that the content of the polymer blocks (a21) of at least one species of the block copolymer (P2) is within the range set forth above, and it is more preferable that the contents of the polymer blocks (a21) of all the block copolymers (P2) are within the range set forth above.

The content of the polymer block (a22) in the block copolymer (P2) is typically from 75 to 95% by mass, preferably from 76 to 94% by mass, more preferably from 77 to 93% by mass, and still more preferably from 78 to 92% by mass. When the pressure-sensitive adhesive composition of the present invention contains two or more species of the styrenic block copolymers (A2), it is preferable that the content of the polymer blocks (a22) of at least one species of the block copolymer (P2) is within the range set forth above, and it is more preferable that the contents of the polymer blocks (a22) of all the block copolymers (P2) are within the range set forth above.

The total content of the polymer block (a21) and the polymer block (a22) in the block copolymer (P2) is preferably 80% by mass or more, more preferably 90% by mass or more, still more preferably 95% by mass or more, and further more preferably 100% by mass. When the pressure-sensitive adhesive composition of the present invention contains two or more species of the styrenic block copolymers (A2), the total content of the polymer block (a21) and the polymer block (a22) in the whole mixture of the block copolymers (P2) is preferably within the range set forth above.

The styrenic block copolymer (A2) is a hydrogenated product of the block copolymer (P2). In view of heat resistance and weather resistance, the hydrogenation ratio of the carbon-carbon double bond in the polymer block (a22) is preferably from 50 to 100% by mole, more preferably from 70 to 100% by mole, further preferably from 75 to 100% by mole, further more preferably from 80 to 100% by mole, particularly preferably from 85 to 100% by mole, and more particularly preferably from 90 to 100% by mole. When the pressure-sensitive adhesive composition of the present invention contains two or more species of the styrenic block copolymers (A2), it is preferable that the hydrogenation ratio of the whole mixture of the styrenic block copolymers (A2) is within the range set forth above, and it is more preferable that the hydrogenation ratios of all the styrenic block copolymers (A2) are within the range set forth above. The hydrogenation ratio can be calculated from the $^1$H-NMR measurement result as in the case of the styrenic block copolymer (A1).

The melt viscosity of the styrenic block copolymer (A2) measured at a temperature of 230°C and a shear rate of 121.6 (1/sec) in accordance with ISO 11443:1995 is preferably 400 (Pa·s) or more and less than 3000 (Pa·s). When the styrenic block copolymer (A2) having a melt viscosity within the above mentioned range is included in the pressure-sensitive adhesive composition, the flexibility of the pressure-sensitive adhesive composition can be retained, the adjustment of the melt viscosity thereof is facilitated, and in particular, the molding (film production) of a laminate is facilitated.

In view of moldability and adhesion, the melt viscosity of the styrenic block copolymer (A2) is more preferably 450 (Pa·s) or more and 2500 (Pa·s) or less, still more preferably 500 (Pa·s) or more and 2000 (Pa·s) or less, and further more preferably 550 (Pa·s) or more and 1500 (Pa·s) or less. When the pressure-sensitive adhesive composition of the present invention contains two or more species of the styrenic block copolymers (A2), it is preferable that the melt viscosity (e.g., the sum of the melt viscosity for each copolymer multiplied by the respective weight fraction) of the whole mixture of the styrenic block copolymers (A2) is within the range set forth above, it is more preferable that the melt viscosity of the whole mixture of the styrenic block copolymers (A2) is within the range set forth above, and the melt viscosities of all the styrenic block copolymers (A2) are within the range set forth above.

In view of molding processability, the number average molecular weight (Mn) of the styrenic block copolymer (A2) is preferably 50,000 or more, more preferably 60,000 or more, still more preferably 75,000 or more, and is preferably 300,000 or less, more preferably 250,000 or less, still more preferably 180,000 or less. When the pressure-sensitive adhesive composition of the present invention contains two or more species of the styrenic block copolymers (A2), it is preferable that Mn of at least one species of the styrenic block copolymer (A2) is within the range set forth above, and it is more preferable that Mn's of all the styrenic block copolymers (A2) are within the range set forth above.

The molecular weight distribution (Mw/Mn) of the styrenic block copolymer (A2) is preferably from 1 to 6.00, more preferably from 1 to 4.00, still more preferably from 1 to 3.00, further more preferably from 1 to 2.00, and particularly preferably from 1 to 1.30. When the molecular weight distribution is within the range set forth above, a variation in viscosity of the styrenic block copolymer (A2) is reduced, and its handling is easy. When the pressure-sensitive adhesive composition of the present invention contains two or more species of the styrenic block copolymers (A2), it is preferable that Mw/Mn of at least one species of the styrenic block copolymer (A2) is within the range set forth above, and it is more preferable that Mw/Mn's of all the styrenic block copolymers (A2) are within the range set forth above.

As long as the effect of the present invention is not inhibited, the block copolymer (P2) may contain a polymer block made up of another monomer, in addition to the polymer block (a21) and the polymer block (a22).

Specific examples of such another monomer are the same as in the case of the block copolymer (P1). These may be used singly or in combination of two or more kinds thereof.

When the block copolymer (P2) includes another polymer block, the content thereof is preferably 20% by mass or less, more preferably 10% by mass or less, and further more preferably 5% by mass.

In view of more easily obtaining a pressure-sensitive adhesive composition that more effectively exhibits the effects of the present invention, the ratio (A2)/(B) (at a temperature of 230°C and a shear rate of 121.6 (1/sec)) of the melt viscosity of the styrenic block copolymer (A2) to the melt viscosity of the acrylic block copolymer (B), each of which is measured at a temperature of 230°C and a shear rate of 121.6 (1/sec), as described in the above (6), is preferably 2.0 or more and 16.0 or less ($2.0 \leq$ (A2)/(B) (at a temperature of 230°C and a shear rate of 121.6 (1/sec)) $\leq 16.0$: Condition (6-1)), and more preferably 2.0 or more and 8.0 or less ($2.0 \leq$ (A2)/(B) (at a temperature of 230°C and a shear rate of 121.6 (1/sec)) $\leq 8.0$: Condition (6-2))). Note that, when using a mixture of two or more species of the styrenic block copolymer (A2), the melt viscosity of the whole mixture (e.g., the sum of the melt viscosity for each copolymer multiplied by the respective weight fraction) is preferably in the above-mentioned range. The same applies to the case of using a mixture of two or more species of the acrylic block copolymer (B).

[Method of producing styrenic block copolymer (A2)]

The styrenic block copolymer (A2) can be suitably produced, for example, by a polymerization step of obtaining the block copolymer (P2) by anionic polymerization and a step of hydrogenating a carbon-carbon double bond in the polymer block (a22) in the block copolymer (P2). The descriptions about the polymerization step and about the hydrogenation step, as well as the descriptions about the modifying method of the block copolymer, for example, are the same as the contents described in [Method of producing styrenic block copolymer (A1)].

In view of further improving the flexibility and film formability of the pressure-sensitive adhesive composition, the mass ratio [(A1):(A2)] of the content of the styrenic block copolymer (A1) to the content of the styrenic block copolymer (A2) in the pressure-sensitive adhesive composition of the present invention is preferably from 10:90 to 90:10, more preferably from 10:90 to 70:30, still more preferably from 12:88 to 67:33, even more preferably from 14:86 to 64:36, further more preferably from 16:84 to 61:39, and particularly preferably from 18:82 to 58:42. Note that, when two or more species of the styrenic block copolymer (A1) or two or more species of the styrenic block copolymer (A2) are contained in the pressure-sensitive adhesive composition of the present invention, the total content of these styrenic block copolymers is preferably within the range set forth above.

The mass ratio [((A1) + (A2)):(B)] of the total content of the styrenic block copolymer (A1) and the styrenic block copolymer (A2) to the content of the acrylic block copolymer (B) in the pressure-sensitive adhesive composition of the present invention is preferably from 10:90 to 90:10, more preferably from 80:20 to 20:80, and still more preferably from 60:40 to 40:60. When the mass ratio [((A1) + (A2)):(B)] is within the range set forth above, higher flexibility can be imparted to the pressure-sensitive adhesive composition of the present invention.

<Tackifier resin>

The pressure-sensitive adhesive composition of the present invention may contain a tackifier resin in view of improving adhesion to a base material containing a non-polar resin such as polyolefin. Examples of the tackifier resin include: rosin-based compounds such as natural rosins, modified rosins, glycerol esters of natural rosins, glycerol esters of modified rosins, pentaerythritol esters of natural rosins, pentaerythritol esters of modified rosins, hydrogenated rosins, and pentaerythritol esters of hydrogenated rosins; terpene-based compounds such as copolymers of natural terpene, three-dimensional polymers of natural terpene, aromatic modified terpene resins, hydrogenated derivatives of aromatic modified terpene resins, terpene phenol resins, hydrogenated derivatives of terpene phenol resins, terpene resins (such as monoterpene, diterpene, triterpene, and polypertene), hydrogenated terpene resins; and hydrocarbon resins such as aliphatic petroleum hydrocarbon resins (C5 resins), hydrogenated derivatives of aliphatic petroleum hydrocarbon resins, aromatic petroleum hydrocarbon resins (C9 resins) such as styrene oligomers, hydrogenated derivatives of aromatic petroleum hydrocarbon resins, dicyclopentadiene-based resins, hydrogenated derivatives of dicyclopentadiene-based resins, C5/C9 copolymer resins, hydrogenated products of C5/C9 copolymer resins, cyclic aliphatic petroleum hydrocarbon resins, and hydrogenated products of cyclic aliphatic petroleum hydrocarbon resins. Among these tackifier resins, a hydrocarbon resin is preferable in view of improving the compatibility with the styrenic block copolymer (A1) and the styrenic block copolymer (A2).

As the tackifier resin, one kind thereof may be used singly, or two or more kinds thereof may be used in combination.

When the pressure-sensitive adhesive composition of the present invention contains a tackifier resin, the content of the tackifier resin is preferably from 5 to 20 parts by mass, and more preferably from 7 to 15 parts by mass, relative to 100 parts by mass in total of the styrenic block copolymer (A1), the acrylic block copolymer (B), the styrenic block copolymer (A2) which is contained as needed, and the tackifier resin, from the perspective that the surface protection film including the laminate obtained in the present invention is allowed to exhibit an unwinding force within an appropriate range.

(Other optional components)

The pressure-sensitive adhesive composition of the present invention may contain other optional components such as a softener, an antioxidant, an inorganic filler, another thermoplastic polymer (excluding the styrenic block copolymer (A1), the styrenic block copolymer (A2), and the acrylic block copolymer (B)), a lubricant, a light stabilizer, a processing aid, a colorant such as a pigment or a dye, a flame retardant, an antistatic agent, a matting agent, a silicon oil, an anti-blocking agent, an ultraviolet absorber, a release agent, a foaming agent, an antibacterial agent, an antifungal agent, and a perfume, as necessary, as long as the effects of the present invention are not impaired.

As these other optional components, one kind thereof may be used singly, or two or more kinds thereof may be used in combination.

The softening agent can be contained in the pressure-sensitive adhesive composition of the present invention for the purpose of, for example, further imparting flexibility. As the softener, there can be used a softener generally used for rubber and plastics. Examples of the softener include: paraffinic, naphthenic, and aromatic process oils; phthalic acid derivatives such as dioctyl phthalate and dibutyl phthalate; white oil; mineral oil; liquid cooligomer of ethylene and $\alpha$-olefins; liquid paraffin; polybutene; low molecular weight polyisobutylene; and liquid polydienes such as liquid polybutadiene, liquid polyisoprene, liquid polyisoprene-butadiene copolymer, liquid styrene-butadiene copolymer, and liquid styrene-isoprene copolymer, and hydrogenated products thereof. Among them, in view of compatibility with the styrenic block copolymer (A1) and with the styrenic block copolymer (A2) which is contained as needed, a paraffinic process oil; liquid cooligomer of ethylene and $\alpha$-olefins; liquid paraffin; low molecular weight polyisobutylene and hydrogenated products thereof are preferable, and hydrogenated products of paraffinic process oils are more preferable.

As the softening agent, one kind thereof may be used singly, or two or more kinds thereof may be used in combination.

Examples of the antioxidant include: hindered phenol-based, phosphorus-based, lactone-based, and hydroxyl-based antioxidants. Among them, a hindered phenol-based antioxidant is preferable. As the antioxidant, one kind thereof may be used singly, or two or more kinds thereof may be used in combination.

The inorganic filler can be contained with the aim such as improvement of physical properties such as heat resistance and weather resistance of the pressure-sensitive adhesive composition of the present invention, hardness adjustment, and improvement of economic efficiency as an extender. Examples of the inorganic filler include: calcium carbonate, talc, magnesium hydroxide, aluminum hydroxide, mica, clay, natural silicic acid, synthetic silicic acid, titanium oxide, carbon black, barium sulfate, glass balloon, and glass fiber. As the inorganic filler, one kind thereof may be used singly, or two or more kinds thereof may be used in combination.

The method of producing the pressure-sensitive adhesive composition of the present invention is not particularly limited, and the pressure-sensitive adhesive composition may be produced by any method as long as it is a method capable of uniformly mixing the styrenic block copolymer (A1), the acrylic block copolymer (B), and, if necessary, the styrenic block copolymer (A2), the tackifier resin, and other optional components. Among them, a melt-kneading method is preferable as a method of producing the pressure-sensitive adhesive composition. The melt-kneading can be performed using, for example, a melt-kneading apparatus such as a single screw extruder, a twin screw extruder, a kneader, a batch mixer, a roller, or the Banbury mixer, and the pressure-sensitive adhesive composition of the present invention can be preferably obtained by melt-kneading at 170 to 270°C. Note that, a target molded body (such as a surface protection film, or a laminate) can be directly produced without any problem by using, for example, a thermoforming machine such as an extrusion molding machine or an injection molding machine from a mixture (dry blend) in which the styrenic block copolymer (A1), the acrylic block copolymer (B), and other components contained as necessary are dry-blended, which result in the pressure-sensitive adhesive composition of the present invention. Even when a laminate and a surface protection film of the present invention, which are to be described later, are produced from such a dry blend, these molded bodies can exhibit the effect of the present invention comparable to molded bodies which are produced by using the pressure-sensitive adhesive composition (melt-kneaded product) of the present invention, which are obtained by the melt-kneading described above.

A molded body can be produced from the pressure-sensitive adhesive composition of the present invention by, for example, thermoforming such as extrusion molding or injection molding. Such molded body can be used for various applications. The molded body is not particularly limited in its shape, its structure, and its application, for example. The pressure-sensitive adhesive composition of the present invention is excellent in moldability (thermoformability) such as extrusion moldability, and exhibits excellent adhesion even to a high-polarity material. For this reason, it can be used as a laminate containing an adhesive layer including the pressure-sensitive adhesive composition of the present invention and a base material including another material apart from the pressure-sensitive adhesive composition.

[Laminate]

The laminate of the present invention contains: a pressure-sensitive adhesive layer including the pressure-sensitive adhesive composition of the present invention; and a base material including another material apart from the pressure-sensitive adhesive composition. The laminate of the present invention may contain two or more kinds of adhesive layers including the pressure-sensitive adhesive composition and two or more kinds of base materials including another material apart from the pressure-sensitive adhesive composition.

The shape of the laminate is not particularly limited, and examples thereof include a film-like shape, a sheet-like shape, and a tubular shape, and among these, a film-like or sheet-like laminate is preferable.

Examples of another material apart from the pressure-sensitive adhesive composition of the present invention, which serve as the base material of the laminate include: synthetic resins, ceramics, metals, and fabrics.

Examples of the synthetic resin include: polyolefins such as polyethylene, polypropylene, polybutene-1, polyhexene-1, poly(3-methyl-1-butene), poly(4-methyl-1-pentene), copolymers of ethylene and one or more species of $\alpha$-olefins with 3 to 20 carbon atoms (such as propylene, 1-butene, 1-pentene, 1-hexene, 1-heptene, 1-octene, 1-decene, 3-methyl-1-butene, 4-methyl-1-pentene, 6-methyl-1-heptene, isooctene, isooctadiene, or decadiene), ethylene-propylene-diene copolymers (EPDM), ethylene-vinyl acetate copolymers, and ethylene-acrylic acid copolymers; polyurethane resins, polyamide resins, polyester resins, polycarbonate resins, polyphenylene sulfide resins, polyacrylate resins, polymethacrylate resins such as polymethyl methacrylate resin, polyether resins, (meth)acrylonitrile-butadiene-styrene resins, (meth)acrylonitrile-styrene resins, (meth)acrylic acid ester-butadiene-styrene resins, (meth)acrylic acid ester-styrene resins, methyl (meth)acrylate-butadiene-styrene resins, epoxy resins, phenol resins, diallyl phthalate resins, polyimide resins, melamine resins, polyacetal resins, polysulfone resins, polyethersulfone resins, polyetherimide resins, polyphenylene ether resins, polyarylate resins, polyetheretherketone resins, polystyrene resins, rubber-reinforced polystyrene resins, and syndiotactic polystyrene resins. Note that, "(meth)acrylonitrile" as used herein means "acrylonitrile or methacrylonitrile".

Among these synthetic resins, a polyolefin is preferable, and polypropylene is more preferable.

As these synthetic resins, one kind thereof may be used singly, or two or more kinds thereof may be used in combination.

The material serving as the base material may be further added with an additive, such as a heat stabilizer, a light stabilizer, an ultraviolet absorber, an antioxidant, a lubricant, a colorant, an antistatic agent, a flame retardant, a water repellent, a waterproof agent, a hydrophilicity imparting agent, a conductivity imparting agent, a thermal conductivity imparting agent, an electromagnetic wave shielding property imparting agent, a translucency modifier, a fluorescent agent, a slidability imparting agent, a transparency imparting agent, an anti-blocking agent, a metal inactivating agent, and a bacteriostatic agent, as necessary, within a range not impairing the object of the present invention.

The ceramics used in the base material of the laminate of the present invention mean nonmetallic inorganic materials, and examples thereof include metal oxides, metal carbides, and metal nitrides. Examples of the ceramics include: glass, cements, alumina, zirconia, zinc oxide-based ceramics, barium titanate, lead zirconate titanate, silicon carbide, silicon nitride, and ferrites.

Examples of the metal serving as the base material include iron, copper, aluminum, magnesium, nickel, chromium, zinc, and alloys containing these metals as components. The base material may be a base material having a layer formed of a metal. Examples of such base material include a base material having a layer formed by plating such as copper plating, nickel plating, chromium plating, tin plating, zinc plating, platinum plating, gold plating, or silver plating.

The types of the fabric used as the base material of the laminate of the present invention is not particularly limited, and examples thereof include woven fabrics, knitted fabrics, felts, and nonwoven fabrics. The material of the fabric may be a natural fiber, a synthetic fiber, or a mixture made up of natural fibers and synthetic fibers. Examples of the natural fiber include, although not particularly limited, one or more selected from the group consisting of cotton, silk, hemp, and hair.

The synthetic fiber is preferably at least one selected from among polyester fibers, acrylic fibers (polyacrylonitrile), polyurethane fibers, polyamide fibers, polyolefin fibers, and vinylon fibers. Examples of the polyamide fiber include nylon 6 and nylon 66. Examples of the polyolefin fiber include polyethylene fibers and polypropylene fibers.

Other material, which is to be used as a material serving a base material of the laminate of the present invention, apart from the pressure-sensitive adhesive composition, is preferably a synthetic resin or a metal, in view of further exhibiting an excellent adhesion, which is an effect of the present invention.

The method of producing the laminate of the present invention is not particularly limited, but an adhesive layer including the pressure-sensitive adhesive composition of the present invention is preferably produced by melt lamination molding onto a base material including the above-mentioned other material. Examples thereof include: molding processes such as injection insert molding process, extrusion lamination process, co-extrusion molding process, calendaring molding process, slush molding process, press molding process, and melt casting process.

For example, when a laminate is produced by an injection insert molding process, a base material (a base material formed of another material apart from the pressure-sensitive adhesive composition of the present invention) which has been formed in a predetermined shape and dimension in advance is placed in a mold, and onto which the pressure-sensitive adhesive composition of the present invention is injection-molded, so that the laminate can be produced. When a laminate is produced by an extrusion lamination process, the pressure-sensitive adhesive composition of the present invention in a molten state, which is extruded from a die having a predetermined shape attached to an extruder, is directly extruded to a surface or an edge of a base material which has been formed in a predetermined shape and dimension in advance, so that the laminate can be produced. When a laminate is produced by a co-extrusion molding process, the pressure-sensitive adhesive composition of the present invention and another synthetic resin (apart from the pressure-sensitive adhesive composition) serving as a base material, which are simultaneously melted, are extruded by using two extruders, so that the laminate can be produced. When a laminate is produced by a calendaring molding process, the pressure-sensitive adhesive composition of the present invention which is melted and rolled by a heating roll and brought into a molten state through several rolls is heat-fused to the surface of a base material which has been previously formed into a predetermined shape and dimension, so that the laminate can also be produced. When a laminate is produced by a press molding process, a molded body including the pressure-sensitive adhesive composition of the present invention is molded in advance by an injection molding process or an extrusion molding process, and the molded body is then provided onto a base material formed in advance in a predetermined shape and dimension by heating and pressurizing with an apparatus such as press molding machine. The molding process like this is particularly suitable when the base material is a ceramic or a metal.

As the molding process by melt lamination molding, an extrusion lamination process, a co-extrusion molding process, or a calendaring molding process is preferable.

The laminate of the present invention is suitable as a surface protection film whose adhesive layer is adhered to a surface of an article formed of various materials thereby protecting the surface of the article. When the laminate is used as a surface protection film, the base material of the laminate is suitably a base material containing polyolefin.

When the laminate is used as a surface protection film, the thickness of the adhesive layer is preferably 20 um or less, more preferably 15 um or less, and preferably 1 um or more. When the thickness of the adhesive layer is more than the upper limit, the adhesive strength to an article whose surface to be protected is increased, and there may be generated adhesive residues when the surface protection film is peeled off from the article, and the adhesive strength between the adhesive layer and the base material is increased, and hence there may be a case where an unroll property from a rolled product is deteriorated. Otherwise, when the thickness of the adhesive layer is less than the lower limit, for example, in case where an adherend of the surface protection film has a protruding structure, the leading end thereof is liable to be damaged, the adhesive strength decreases, and there may be a case where peeling from the adherend may occur, for example.

The surface protection film of the present invention can be produced by the above-described method of producing a laminate, but is preferably produced by a co-extrusion method. According to the coextrusion method, the base material and the adhesive layer can be laminated at once without using any solvent, and the surface protection film can be formed by a relatively simple production apparatus. Moreover, the production process can be simplified to keep the production cost of the surface protection film at a low price. Furthermore, the surface protection film formed by the coextrusion process exhibits a high interlaminar strength between the base material and the adhesive layer, and the adhesive residue is less likely to occur when the surface protection film is peeled off from an article. As the coextrusion process, there may be a feed block process or a multi-manifold process.

The surface protection film of the present invention is configured to adhere to the surface of articles and is used for the purpose of protecting the surface of the articles, and is preferably used for the purpose of protecting the surface of articles including a metal plate, a glass plate, and a synthetic resin plate. In particular, the surface protection film of the present invention can be suitably used for a prism sheet including a protrusion having a generally triangular cross section with an apex angle of 80° to 100° and a height of 20 um to 80 um on the surface of these articles.

The surface protection film of the present invention only needs to include the base material and the adhesive layer, and may include another functional layer such as an ultraviolet absorbing layer, for example. When the ultraviolet absorbing layer is included, for example, an article covered with the surface protection film can be protected not only from physical contact but also from ultraviolet rays.

A release agent may be blended in the base material. As a result, when the surface protection film is formed into a roll, an excellent unroll property can be obtained without contaminating the adhesive layer. Examples of the release agent include a resin obtained by graft polymerization of siloxane to olefin.

A surface protection film having an adhesive layer made of the pressure-sensitive adhesive composition of the present invention, for example, is excellent in the balance between the adhesion and the unwinding force (e.g., release property from the base material (typically including a polyolefin such as polypropylene)), probably because the compatibility (miscibility) between the styrenic block copolymer (A1) and the acrylic block copolymer (B) in the pressure-sensitive adhesive composition of the present invention is improved when the styrenic block copolymer (A1) and the acrylic block copolymer (B) are used in combination. Therefore, so-called adhesive residues do not occur from a laminate including an adhesive layer including the pressure-sensitive adhesive composition of the present invention, thereby enabling to suppress the contamination of an adherend. Moreover, it is particularly excellent in release from a polyolefin base material such as polypropylene, so that the force to unroll the roll-shaped laminate is small, and no release mark remains on the pressure sensitive adhesive surface.

For this reason, the pressure-sensitive adhesive composition of the present invention and the laminate of the present invention can be widely applied to various applications, and can be suitably used, for example, as an application of surface protection film of base materials for optical applications.

Examples

Hereinafter, the present invention will be described with reference to Examples, but the present invention is not limited to these Examples. Note that, physical properties in Examples and Comparative Examples were measured or evaluated by the following methods.

[Measurement or Evaluation method]

<Melt viscosity>

The melt viscosities of the styrenic block copolymer (A1), of the styrenic block copolymer (A2), and of the acrylic block copolymer (B) were measured with a capillograph in accordance with ISO 11443. The measurement was performed three times, and the average value thereof was taken as the melt viscosity.

·Apparatus: Toyo Seiki Seisaku-sho, Ltd., Product name: "CAPIROGRAPH 1C"
·Temperature: 190°C, 230°C
·Shear rate: 121.6 (1/sec)
·Capillary die inner diameter: φ1.0 mm
·Capillary die length: 10.0 mm
·Piston diameter: φ9.510 mm
·Furnace diameter: φ9.55 mm

<Number average molecular weight (Mn), Molecular weight distribution (Mw/Mn)>

The number average molecular weight (Mn) and the weight average molecular weight (Mw) were determined in terms of polystyrene equivalent molecular weight by gel permeation chromatography (hereinafter abbreviated as GPC), and the molecular weight distribution (Mw/Mn) was calculated from these values. Details are as follows.

·Apparatus: GPC system "HLC-8020" manufactured by Tosoh Corporation
·Separation column: "TSKgel GMHXL", "G4000HXL"
and "G5000HXL", manufactured by Tosoh Corporation, were connected in series.
·Eluent: tetrahydrofuran
·Eluent flow rate: 1.0 ml/min
·Column temperature: 40°C
·Detection method: differential refractive index (RI)

<Mass ratio of each polymer block in styrenic block copolymer (A1), in styrenic block copolymer (A2), and in acrylic block copolymer (B)>

The component ratio of each polymer block and the composition ratio of each polymer block in the styrenic block copolymer (A1) (block copolymer (P1)), in the styrenic block copolymer (A2) (block copolymer (P2)), and in the acrylic block copolymer (B) were determined from the integrated value of peaks assigned to characteristic groups of each monomer unit by performing $^1$H-NMR ($^1$H-nuclear magnetic resonance) measurement under the following measurement conditions.

Measurement conditions

·Apparatus: Nuclear magnetic resonance spectrometer "JNM-LA400" manufactured by JEOL Ltd.

·Deuterated solvent: Deuterated chloroform

Regarding the styrenic block copolymer, the block copolymer (such as block copolymer (P1), or block copolymer (P2)) before subjected to hydrogenation was dissolved in deuterated chloroform, and the content of each polymer block was calculated from the ratio of the integrated value of peaks derived from styrene (aromatic vinyl compound) to the integrated value of peaks derived from a conjugated diene with the above-described apparatus.

Regarding the acrylic block copolymer, the content of each polymer block was calculated as follows. That is, in the $^1$H-NMR spectrum, signals around 3.6 ppm and 4.0 ppm are each assigned to hydrogen atoms (-O-C$\underline{H}_3$) bonded to a carbon atom adjacent to an oxygen atom contained in an ester group of a structural unit derived from methyl methacrylate and hydrogen atoms (-O-C$\underline{H}_2$-CH$_2$-CH$_2$-CH$_3$) bonded to a carbon atom adjacent to an oxygen atom contained in an ester group of a structural unit derived from n-butyl acrylate, the ratio of integrated values of these signals is used to determine the mole ratio of each monomer unit, and the mole ratio is converted to the mass ratio based on the molecular weight of the monomer unit. Thus, the content of each polymer block was calculated.

<The amounts of 1,2-bonding and 3,4-bonding (degree of vinylation)>

The amounts of 1,2-bonding and 3,4-bonding (degree of vinylation) in the styrenic block copolymer (A1) and in the styrenic block copolymer (A2) were determined from the integral values of peaks attributed to characteristic groups of each monomer unit by performing $^1$H-NMR ($^1$H-nuclear magnetic resonance) measurement under the following measurement conditions.

·Apparatus: Nuclear magnetic resonance spectrometer "JNM-LA400" manufactured by JEOL Ltd.
·Deuterated solvent: Deuterated chloroform

[Raw materials used in Examples]

Hereinafter, the raw materials used in Examples and in Comparative Examples will be described in detail. Tables 1 to 3 show physical property values thereof.

[Styrenic block copolymer (A1) and styrenic block copolymer (A2) used in Examples and Comparative Examples]

The styrenic block copolymers (A1-1) to (A1-2) corresponding to the styrenic block copolymer (A1) and the styrenic block copolymers (A2-1) to (A2-4) corresponding to the styrenic block copolymer (A2) were produced as follows.

In a cyclohexane solvent, in the presence of a Lewis base such as tetrahydrofuran as necessary, sec-butyllithium (in cyclohexane solution) as an organic alkali metal was used as a polymerization initiator, and a monomer (styrene, isoprene, or butadiene) corresponding to each block was sequentially added, whereby a polymerization reaction liquid containing a block copolymer (P1) or (P2) made up of a plurality of polymer blocks was obtained by anionic polymerization. After the polymerization reaction had been stopped, to the reaction solution containing this block copolymer (P1) or (P2) was added palladium carbon as a hydrogenation catalyst to perform a hydrogenation reaction. The hydrogenation reaction was stopped, the reaction solution was allowed to cool and to release the pressure, thereafter palladium carbon was removed by filtration, the filtrate was concentrated and furthermore dried under vacuum to give a styrenic block copolymer (A1) or (A2). Note that detailed production conditions can be determined with reference to, for example, the description such as various synthesis examples in JP 5936791 B2.

The properties of the styrenic block copolymers (A1-1) to (A1-2) and of the styrenic block copolymers (A2-1) to (A2-4) obtained by the above-described production method are summarized in Table 1.

<Styrenic block copolymer (A1-1)>

The styrenic block copolymer (A1-1) is a hydrogenated product of a triblock copolymer made up of a styrene polymer block/a butadiene polymer block/a styrene polymer block in which the content of the polymer block (styrene polymer block; polymer block (a11)) containing a styrene-derived structural unit is 20% by mass and the degree of vinylation is 70% by mole.

<Styrenic block copolymer (A1-2)>

The styrenic block copolymer (A1-2) is a hydrogenated product of a triblock copolymer made up of a styrene polymer block/an isoprene polymer block/a styrene polymer block in which the content of the polymer block (styrene polymer block; polymer block (a11)) containing a styrene-derived structural unit is 30% by mass and the degree of vinylation is 5% by mole.

<Styrenic block copolymer (A2-1)>

The styrenic block copolymer (A2-1) is a mixture of: a hydrogenated product of a triblock copolymer made up of a styrene polymer block/a butadiene polymer block/a styrene polymer block in which the content of the polymer block (styrene polymer block; polymer block (a21)) containing a styrene-derived structural unit is 12% by mass and the degree of vinylation is 40% by mole; and a diblock copolymer made up of a styrene polymer block/a butadiene polymer block.
Note that, in the styrenic block copolymer (A2-1), the content of the styrene polymer block in the whole mixture is defined as the content of the polymer block (a21), and Mn, Mw/Mn, the melt viscosity, and the degree of vinylation of the entire mixture are defined as the respective values of the styrenic block copolymer (A2-1).

<Styrenic block copolymer (A2-2)>

The styrenic block copolymer (A2-2) is a mixture of: a hydrogenated product of a triblock copolymer made up of a styrene polymer block/an isoprene polymer block/a styrene polymer block in which the content of the polymer block (styrene polymer block; polymer block (a21)) containing a styrene-derived structural unit is 13% by mass and the degree of vinylation is 5% by mole; and a hydrogenated product of a diblock copolymer made up of a styrene polymer block/an isoprene polymer block.
Note that, in the styrenic block copolymer (A2-2), the content of the styrene polymer block in the whole mixture is defined as the content of the polymer block (a21), and Mn, Mw/Mn, the melt viscosity, and the degree of vinylation of the entire mixture are defined as the respective values of the styrenic block copolymer (A2-2).

<Styrenic block copolymer (A2-3)>

The styrenic block copolymer (A2-3) is a hydrogenated product of a triblock copolymer made up of a styrene polymer block/an isoprene polymer block/a styrene polymer block in which the content of the polymer block (styrene polymer block; polymer block (a21)) containing a styrene-derived structural unit is 18% by mass and the degree of vinylation is 6% by mole.

<Styrenic block copolymer (A2-4)>

The styrenic block copolymer (A2-4) is a hydrogenated product of a triblock copolymer made up of a styrene polymer block/a vinyl isoprene polymer block (an isoprene polymer block having a high degree of vinylation)/a styrene polymer block in which the content of the polymer block (styrene polymer block; polymer block (a21)) containing a styrene-derived structural unit is 20% by mass and the degree of vinylation is 60% by mole.

[Table 1]

| Styrenic block copolymer | | The content of polymer block (a11) or (a21) (% by mass) | Number average molecular weight (Mn) | Molecular weight distribution (Mw/Mn) | Degree of vinylation (% by mole) | Melt viscosity[1] at 230°C (Pa·s) | Melt viscosity[1] at 190°C (Pa·s) |
|---|---|---|---|---|---|---|---|
| | | | | | | | |
| Styrenic block copolymer (A1) | A1-1 | 20 | 68,400 | 1.05 | 70 | 50.9 | 240.3 |
| | A1-2 | 30 | 52,100 | 1.04 | 5 | 139.6 | 552.8 |
| Styrenic block copolymer (A2) | A2-1 | 12 | 102,800 | 1.19 | 40 | 979.7 | 2117.0 |
| | A2-2 | 13 | 100,600 | 1.22 | 5 | 641.2 | 904.9 |
| | A2-3 | 18 | 90,300 | 1.05 | 6 | 1197.0 | 3136.0 |
| | A2-4 | 20 | 89,300 | 1.21 | 60 | 698.2 | 1712.0 |
| 1) The melt viscosity is a value measured under the condition: shear rate is 121.6 (1/sec) | | | | | | | |

[Acrylic block copolymer (B) used in Examples and in Comparative Examples]

The acrylic block copolymers (B-1) to (B-4) corresponding to the acrylic block copolymer (B) were produced by living anion polymerization as follows.

In a toluene solvent, in the presence of 1,2-dimethoxyethane as an ether compound and isobutylbis(2,6-di-tert-butyl-4-methylphenoxy) aluminum as an organic aluminum compound, sec-butyllithium as an organic alkali metal compound was used as a polymerization initiator, a predetermined amount of methyl methacrylate was first charged in accordance with the charging ratio of each polymer block described in Table 2. The reaction liquid was initially colored in yellow, but became colorless after stirring at room temperature for 60 minutes. Subsequently, the polymerization liquid was cooled down so that the internal temperature became -30°C, a predetermined amount of n-butyl acrylate was continuously added such that the internal temperature was not higher than -20°C, and after charging, the mixture was stirred at -30°C for 5 minutes. Furthermore, a predetermined amount of methyl methacrylate was added thereto, and the mixture was stirred overnight at room temperature to afford a polymerization reaction liquid containing an acrylic block copolymer (B) made up of a plurality of polymer blocks. After the polymerization reaction had stopped, the aluminum content and the lithium content were removed, and then the polymerization reaction liquid was introduced into a devolatilizing twin screw extruder, thereby removing the volatile component to give an acrylic block copolymer (B).

Table 2 summarizes the properties of the acrylic block copolymers (B-1) to (B-4).

<Acrylic block copolymer (B-1)>

As shown in Table 2 below, the acrylic block copolymer (B-1) is a triblock copolymer of a methyl methacrylate polymer block (PMMA)-an n-butyl acrylate polymer block (PnBA)-a methyl methacrylate polymer block (PMMA) in which a polymer block (b12) containing a structural unit derived from methyl methacrylate is contained at a ratio of 22.5% by mass.

<Acrylic block copolymer (B-2)>

The acrylic block copolymer (B-2) is a triblock copolymer of a methyl methacrylate polymer block (PMMA)-an n-butyl acrylate polymer block (PnBA)-a methyl methacrylate polymer block (PMMA) in which a polymer block (b12) containing a structural unit derived from methyl methacrylate is contained at a ratio of 16.2% by mass.

<Acrylic block copolymer (B-3)>

The acrylic block copolymer (B-3) is a triblock copolymer of a methyl methacrylate polymer block (PMMA)-an n-butyl acrylate polymer block (PnBA)-a methyl methacrylate polymer block (PMMA) in which a polymer block (b12) containing a structural unit derived from methyl methacrylate is contained at a ratio of 10.7% by mass.

<Acrylic block copolymer (B-4)>

The acrylic block copolymer (B-4) is a triblock copolymer of a methyl methacrylate polymer block (PMMA)-an n-butyl acrylate polymer block (PnBA)-a methyl methacrylate polymer block (PMMA) in which a polymer block (b12) containing a structural unit derived from methyl methacrylate is contained at a ratio of 23.4% by mass.

[Table 2]

| | | The content of polymer block (b12) (% by mass) | Number average molecular weight (Mn) | Molecular weight distribution (Mw/Mn) | Charging ratio of each polymer block | Melt viscosity[1]at 230°C (Pa·s) | Melt viscosity[1]at 190°C (Pa·s) |
|---|---|---|---|---|---|---|---|
| Acrylic block copolymer (B) | B-1 | 22.5 | 90,000 | 1.09 | 9.4/77.5/13.1 | 222.2 | 917.9 |
| | B-2 | 16.2 | 130,000 | 1.10 | 6.8/83.8/9.4 | 184.4 | 622.7 |
| | B-3 | 10.7 | 180,000 | 1.11 | 4.7/89.3/6.0 | 157.5 | 610.2 |
| | B-4 | 23.4 | 55,000 | 1.19 | 11.7/76.6/11.7 | 38.5 | 249.3 |
| 1) The melt viscosity is a value measured under the condition: shear rate is 121.6 (1/sec) | | | | | | | |

[Tackifier resin used in Examples]

·Hydrocarbon resin: SUKOREZ-640 (KOLON INDUSTRIES)

[Examples 1 to 16, Comparative Examples 1 to 7]

<Film production via composition pellet>

(Production of pressure-sensitive adhesive composition pellets)

A mixture in which the styrenic block copolymer (A1), the styrenic block copolymer (A2), and the acrylic block copolymer (B) were mixed at blending ratios shown in Tables 3 and 4 was melt-kneaded with the twin screw extruder set forth below at the melting temperature and kneading conditions set forth below, and then strands were extruded and pellets of the pressure-sensitive adhesive composition were produced by cutting the strands.

Biaxial extruder: ZSK25 (Werner & Pfleiderer)

Melt temperature: 230°C

Kneading conditions: screw speed of 250 rpm, discharge speed of 12 kg/h

(Production of laminate film (surface protection film))

Using two-types of two-layer T-die coextrusion equipment set forth below, pellets of the pressure sensitive adhesive composition and pellets of a homopolypropylene resin (NOBLEN: FLX80E4 (manufactured by Sumitomo Chemical Co., Ltd.)) obtained as described above were each fed to a T-die coextrusion facility, a laminate film including an adhesive layer containing the pressure-sensitive adhesive composition and a base material containing a homopolypropylene resin was wound around a paper tube (φ76.4 (inner diameter) × 12 t × 330 L) under the melt coextrusion conditions set forth below to afford a roll of a laminate film (surface protection film) (layer configuration: base material 48 um; adhesive layer 12 μm).
T-die coextrusion equipment: manufactured by G & M Engineering Company Limited.

Processing temperature: 230°C for PP resin; 230°C for Pressure-sensitive adhesive composition described in Examples and Comparative Examples
Feed block temperature: 230°C
T die temperature; 230°C

Winding speed: 6 m/min

<Film production not via composition pellet: Dry blend>

The dry blend was prepared as follows, the styrenic block copolymer (A1), the styrenic block copolymer (A2), and the acrylic block copolymer (B) each as in the form of pellets were added into a mixer (tumbler: capacity of 50 L) set forth below at blending ratios shown in Tables 3 and 4, and mixed in the time set forth below under the environment set forth below to prepare dry blend pellets which became a pressure-sensitive adhesive composition. Using the resultant dry blend pellets, a film production test was performed in the same manner as in the production of the laminate film (surface protection film).

Mixer (tumbler): MT-50, Matsui Mfg Co., Ltd.
Mixing environment: 23°C × 50 RH
Mixing time: 5 minutes

Physical properties of the laminate film (surface protection film) obtained in each of Examples and Comparative Examples were evaluated according to the method set forth below. The results are shown in Tables 3 and 4.
<Film formability (moldability)>
At the time of producing the laminate film (surface protection film), the surface of the adhesive layer on the laminate film was visually confirmed at a position immediately before the laminate film was wound around a paper tube, and the film formability was evaluated according to the following evaluation criteria.

"Evaluation Criteria"

OO: The surface of the adhesive layer is glossy, and no film cracking in the film and film production is easy.
O: The surface of the adhesive layer has low gloss but no film cracking in the film and film production is easy.
Δ: Slight film cracking occurred in the adhesive layer, and film production is unstable.
X: Film cracking occurred in the adhesive layer, and film production is difficult.

<Unwinding force>

A roll of the resultant laminate film (surface protection film) was cut into a strip shape (L 100 mm × W 25 mm) of the laminate films with several sheets stacked in the flow direction, and the adhesive layer of the undermost laminate film was fixed to an appropriate plate. Thereafter, in accordance with JIS Z 0237:2009, the force applied at the time when peeling off the outermost layer of the films one by one was measured with a tensile tester set forth below under the measurement environment set forth below, under the tensile conditions (tensile speed, peeling angle) set forth below, and the average value of the five measurements was determined. The smaller the obtained value, the better the unwinding force.

Tensile tester: Tabletop tensile tester (AGS-X: manufactured by Shimadzu Corporation)
Tensile speed: 900 mm/min
Peeling angle: 90°
Measurement environment: 23°C × 50 RH

<Adhesion>

A roll of the resultant laminate film (surface protection film) was cut into a strip shape (L 100 mm × W 25 mm) of the laminate films with several sheets stacked in the flow direction, the outermost layer was peeled off one by one from the laminate films, and the adhesive layer side of the peeled laminate film was press-bonded to a methyl methacrylate resin (PMMA) plate (SUMIPEX E (manufactured by Sumitomo Chemical Co., Ltd.)) with a laminator (manufactured by ChemInstruments; 2 kg rubber roller, 10 mm/sec), and adjusted at 23°C × 50% RH for 24 hours. Thereafter, in accordance with JIS Z 0237:2009, the force applied at the time when peeling off the bonded film was measured by a tensile tester set forth below under the measurement environment set forth below, under the tensile conditions (tensile speed, peeling angle) set forth below, and the average value of the five measurements was determined.

Tensile tester: Tabletop tensile tester (AGS-X: manufactured by Shimadzu Corporation)

Tensile speed: 900 mm/min

Peeling angle: 180°

Measurement environment: 23°C $\times$ 50 RH

[Table 3]

| | | Example 1 | Example 2 | Example 3 | Example 4 | Example 5 | Example 6 | Example 7 | Example 8 |
|---|---|---|---|---|---|---|---|---|---|
| Styrenic block copolymer (A1) | A1-1 | 60 | 60 | 50 | 30 | 18 | 18 | 18 | 18 |
| | A1-2 | | | | | | | | |
| Acrylic block copolymer (B) | B-1 | 40 | | 50 | 38 | 27 | | | 27 |
| | B-2 | | | | | | 27 | | |
| | B-3 | | 40 | | | | | 27 | |
| | B-4 | | | | | | | | |
| Styrenic block copolymer (A2) | A2-1 | | | | 32 | 55 | 55 | 55 | |
| | A2-2 | | | | | | | | 55 |
| | A2-3 | | | | | | | | |
| | A2-4 | | | | | | | | |
| Tackifier resin | Hydrocarbon resin | | | | | | | | |
| (A1):(A2) | | 100:0 | 100:0 | 100:0 | 48.4:51.6 | 24.7:75.3 | 24.7:75.3 | 24.7:75.3 | 24.7:75.3 |
| (A1) + (A2):(B) | | 60:40 | 60:40 | 50:50 | 62:38 | 73:27 | 73:27 | 73:27 | 73:27 |
| Melt viscosity ratio at 230°C (B)/(A1) | | 4.36 | 3.09 | 4.36 | 4.36 | 4.36 | 3.62 | 3.09 | 4.36 |
| Melt viscosity ratio at 190°C (B)/(A1) | | 3.82 | 2.54 | 3.82 | 3.82 | 3.82 | 2.59 | 2.54 | 3.82 |
| Melt viscosity ratio at 230°C (A2)/(B) | | - | - | - | 4.41 | 4.41 | 5.31 | 6.22 | 2.89 |

| | | | Example 1 | Example 2 | Example 3 | Example 4 | Example 5 | Example 6 | Example 7 | Example 8 |
|---|---|---|---|---|---|---|---|---|---|---|
| Evaluation items | Film formability (Film production via composition pellet) | | OO | OO | OO | OO | OO | OO | OO | O |
| | Unwinding force (90° peel) Base material: Homo PP | N/25 mm (avg.) | 2.3 | 2.2 | 2.5 | 1.5 | 1.6 | 2.2 | 2.5 | 1.5 |
| | Adherence (180° peel) Adherend: PMMA plate | N/25 mm (avg.) | 5.7 | 7.7 | 6.5 | 4.0 | 4.6 | 5.2 | 5.5 | 7.6 |
| | Film formability (Dry blend) | | OO | - | - | - | OO | - | - | - |
| | Unwinding force (90° peel) Base material: Homo PP | N/25 mm (avg.) | 2.2 | - | - | - | 1.9 | - | - | - |
| | Adherence (180° peel) Adherend: PMMA plate | N/25 mm (avg.) | 5.5 | - | - | - | 4.3 | - | - | - |

| | | Example 9 | Example 10 | Example 11 | Example 12 | Example 13 | Example 14 | Example 15 | Example 16 |
|---|---|---|---|---|---|---|---|---|---|
| Styrenic block copolymer (A1) | A1-1 | 18 | 18 | | | 17 | 17 | 17 | 17 |
| | A1-2 | | | 18 | 18 | | | | |
| Acrylic block copolymer (B) | B-1 | | | 27 | 27 | 25 | 25 | 25 | 12 |
| | B-2 | 27 | | | | | | | |
| | B-3 | | 27 | | | | | | |
| | B-4 | | | | | | | | |

(continued)

| | | Example 1 | Example 2 | Example 3 | Example 4 | Example 5 | Example 6 | Example 7 | Example 8 |
|---|---|---|---|---|---|---|---|---|---|
| Styrenic block copolymer (A2) | A2-1 | | | 55 | | 50 | | 50 | 71 |
| | A2-2 | 55 | 55 | | 55 | | 50 | | |
| | A2-3 | | | | | | | | |
| | A2-4 | | | | | | | 8 | |
| Tackifier resin | Hydrocarbon resin | | | | | 8 | 8 | | |
| (A1):(A2) | | 24.7:75.3 | 24.7:75.3 | 24.7:75.3 | 24.7:75.3 | 25.4:74.6 | 25.4:74.6 | 22.7:77.3 | 19.3:80.7 |
| (A1) + (A2):(B) | | 73:27 | 73:27 | 73:27 | 73:27 | 72.8:27.2 | 72.8:27.2 | 75:25 | 88:12 |
| Melt viscosity ratio at 230°C (B)/(A1) | | 3.62 | 3.09 | 1.59 | 1.59 | 4.36 | 4.36 | 4.36 | 4.36 |
| Melt viscosity ratio at 190°C (B)/(A1) | | 2.59 | 2.54 | 1.66 | 1.66 | 3.82 | 3.82 | 3.82 | 3.82 |
| Melt viscosity ratio at 230°C (A2)/(B) | | 3.48 | 4.07 | 4.41 | 2.89 | 4.41 | 2.89 | 4.23*1 | 4.41 |

| | | | Example 1 | Example 2 | Example 3 | Example 4 | Example 5 | Example 6 | Example 7 | Example 8 |
|---|---|---|---|---|---|---|---|---|---|---|
| Evaluation items | Film formability (Film production via composition pellet) | | O | O | OO | O | OO | O | OO | OO |
| | Unwinding force (90° peel) Base material: Homo PP | N/25 mm (avg.) | 1.9 | 1.4 | 2.2 | 1.5 | 2.9 | 2.6 | 2.5 | 2.0 |
| | Adherence (180° peel) Adherend: PMMA plate | N/25 mm (avg.) | 7.8 | 7.7 | 5.3 | 7.6 | 5.0 | 7.1 | 3.0 | 3.0 |
| | Film formability (Dry blend) | | - | - | - | - | - | - | - | - |
| | Unwinding force (90° peel) Base material: Homo PP | N/25 mm (avg.) | - | - | - | - | - | - | - | - |
| | Adherence (180° peel) Adherend: PMMA plate | N/25 mm (avg.) | - | - | - | - | - | - | - | - |
| *1 The melt viscosity of (A2) is a sum of melt viscosities of the copolymers (A2-1, A2-4) multiplied by respective weight fractions. | | | | | | | | | | |

[Table 4]

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Styrenic block copolymer (A1) | A1-1 | 25 | 95 | 5 | | | | 18 |
| | A1-2 | | | | | | | |
| Acrylic block copolymer (B) | B-1 | | 5 | 95 | 27 | 27 | 40 | |
| | B-2 | | | | | | | |
| | B-3 | | | | | | | |
| | B-4 | | | | | | | 27 |
| Styrenic block copolymer (A2) | A2-1 | 75 | | | 55 | | 60 | 55 |
| | A2-2 | | | | | 55 | | |
| | A2-3 | | | | 18 | 18 | | |
| | A2-4 | | | | | | | |
| Total amount of styrenic block copolymers | | 100 | 95 | 5 | 73 | 73 | 60 | 73 |
| Tackifier resin | Hydrocarbon resin | | | | | | | |
| (A1):(A2) | | 25:75 | 100:0 | 100:0 | 0:100 | 0:100 | 0:100 | 24.7:75.3 |
| (A1) + (A2) (B) | | 100:0 | 95:5 | 5:95 | 73:27 | 73:27 | 60:40 | 73:27 |
| Melt viscosity ratio at 230°C (B)/(A1) | | - | 4.36 | 4.36 | - | - | - | 0.75 |
| Melt viscosity ratio at 190°C (B)/(A1) | | - | 3.82 | 3.82 | - | - | - | 1.04 |
| Melt viscosity ratio at 230°C (A2)/(B) | | - | - | - | 4.65*1 | 3.5*1 | 4.41 | 25.48 |
| Evaluation | Film formability (Film production via composition pellet) | OO | O | Δ | Δ | Δ | Δ | Δ |

(continued)

|  |  | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Unwinding force (90° peel) Base material: Homo PP | N/25 mm (avg.) | 2.2 | 2.0 | - | - | - | - | - |
| Adherence (180° peel) Adherend: PMMA plate | N/25 mm (avg.) | 0.5 | 1.0 | - | - | - | - | - |
| Film formability (Dry blend) | | - | - | △ | X | X | X | X |
| Unwinding force (90° peel) Base material: Homo PP | N/25 mm (avg.) | - | - | - | - | - | - | - |
| Adherence (180° peel) Adherend: PMMA plate | N/25 mm (avg.) | - | - | - | - | - | - | - |

*1 The melt viscosity of (A2) is a sum of melt viscosities of the copolymers multiplied by respective weight fractions.

As shown in Example 1 to 3, the pressure-sensitive adhesive composition obtained by blending the acrylic block copolymer (B) and the styrenic block copolymer (A1) having a melt viscosity lower than that of the acrylic block copolymer (B) was very good in the film formability into a laminate film including an adhesive layer containing the pressure-sensitive adhesive composition, and was excellent in both the surface property of the adhesive layer of the resultant film and the stability of film production. Moreover, the unwinding force of the resultant film was sufficiently small, and the adhesive layer included in the film was excellent in adhesion to a PMMA plate as a high-polarity material.

As shown in Examples 4 to 5, the pressure-sensitive adhesive composition obtained by blending the styrenic block copolymer (A2) having a melt viscosity higher than that of the acrylic block copolymer (B) in addition to the styrenic block copolymer (A1) and the acrylic block copolymer (B) was very good in film formability into a laminate film as in Examples 1 to 3. Furthermore, the unwinding force of the resultant film was smaller than that in Examples 1 to 3, and the adhesive layer included in the film was good enough in adhesion to a PMMA plate.

In Examples 6 to 7, there was examined a blend in which only the species of the acrylic block copolymer (B) was changed from the blend examined in Example 5. In Examples 6 to 7, the film formability into a laminate film was very excellent. Due to the difference in the species of the acrylic block copolymer (B), the unwinding force of the resultant film slightly increased as compared to that in Example 5, but it was at a level with no problem as in Example 1 to 3. Moreover, the adhesive layers in the films obtained in Examples 6 to 7 was improved in adhesion to a PMMA plate as compared to that in Example 5.

In Example 8, there was examined a blend in which only the species of the styrenic block copolymer (A2) was changed from the blend examined in Example 5. In Example 8, the surface of the adhesive layer of the resultant film had low gloss, but the film production stability was excellent, and the film formability was good enough. Moreover, the film obtained in Example 8 was excellent in the unwinding force as compared to those in Examples 1 to 3, and the adhesive layer was significantly improved in adhesion to a PMMA plate as compared to that in Example 5.

In Examples 9 to 10, there was examined a blend in which only the species of the acrylic block copolymer (B) was changed from the blend examined in Example 8. In Examples 9 to 10, the film formability into a laminate film was good enough as in Example 8. Moreover, the films obtained in Examples 9 to 10 were excellent in the unwinding force as compared to those in Examples 1 to 3, and the adhesive layer exhibited a significantly improved adhesion to a PMMA plate as in Example 8.

In Example 11, there was examined a blend in which only the species of the styrenic block copolymer (A1) was changed from the blend examined in Example 5. In Example 11, the unwinding force of the resultant film was slightly increased due to the difference in the species of the styrenic block copolymer (A1) as compared to that in Example 5, but the unwinding force was at a level without any problem as in Examples 1 to 3, and the film formability into a laminate film and the adhesive layer in the film exhibited an excellent adhesion to a PMMA plate as in Example 5.

In Example 12, there was examined a blend in which only the species of the styrenic block copolymer (A2) was changed from the blend examined in Example 11. In Example 12, the surface of the adhesive layer of the resultant film had low gloss, but the film production stability was excellent, and the film formability was good enough. Moreover, the film obtained in Example 12 was excellent in the unwinding force as compared to that in Example 11, and the adhesive layer in the film was improved in the adhesion to a PMMA plate as compared to that in Example 11.

Examples 13 to 14 each are a pressure-sensitive adhesive composition containing a tackifier resin. As compared with the films in Examples 11 to 12 in which no tackifier resin is blended, the unwinding force is slightly increased, but it is in a practically acceptable range. The film formability into a laminate film was good as in Examples 11 to 12, and the adhesive layer in the film was excellent in the adhesion to a PMMA plate as in Examples 11 to 12.

Example 15 is a pressure-sensitive adhesive composition in which two species of styrenic block copolymers (A2) were used in combination. Even when two species of the styrenic block copolymers (A2) were used in combination, the film formability into a laminate film was good, the unwinding force of the resultant film was small, and the adhesive layer in the film exhibited a slightly reduced adhesion to a PMMA plate, but was in a practically acceptable range.

Example 16 is a pressure-sensitive adhesive composition in which the styrenic block copolymer (A2) having a melt viscosity higher than that of the styrenic block copolymer (A1) was blended to a greater extent.

Also in Example 16, the film formability into a laminate film is excellent, and the unwinding force of the resultant film is small. Compared to the adhesive layer obtained from the pressure-sensitive adhesive composition in which the styrenic block copolymer (A2) having a melt viscosity higher than that of the styrenic block copolymer (A1) was blended to a lesser extent, the adhesive layer in the film exhibited a slightly reduced adhesion to a PMMA plate but the adhesion was in a practically acceptable range.

In Comparative Example 1, there was examined a blend not including the acrylic block copolymer (B) with respect to the blends examined in Examples 5 to 7. As shown in Comparative Example 1, the film formability into a laminate film was very excellent, and the unwinding force of the resultant film was also excellent, but since the pressure-sensitive adhesive composition did not contain the acrylic block copolymer (B), the adhesive layer in the film was poor in the adhesion to a PMMA plate.

In Comparative Example 2, there was examined a blend in which the content of the styrenic block copolymer (A1) was larger than the prescription of the present application with respect to the blends examined in Examples 1 and 3. As shown in Comparative Example 2, when the pressure-sensitive adhesive composition contained too much styrenic block copolymer (A1), the surface of the pressure-sensitive adhesive layer of the resultant film had low gloss, but the film production stability was excellent, and the unwinding force of the resultant film was also excellent, but the adhesive layer in the film was poor in the adhesion to a PMMA plate.

On the other hand, in Comparative Example 3, there was examined a blend in which the content of the acrylic block copolymer (B) was larger than the prescription of the present application with respect to the blends examined in Examples 1 and 3. As shown in Comparative Example 3, when the pressure-sensitive adhesive composition contained too much acrylic block copolymer (B), the film production was not stable.

In Comparative Examples 4 to 5, there was examined a blend which did not contain the styrenic block copolymer (A1) but contained the acrylic block copolymer (B) and two species of the styrenic block copolymers (A2). As shown in Comparative Examples 4 to 5, the pressure-sensitive adhesive composition which did not contain the styrenic block copolymer (A1) but which was obtained by blending two species of the styrenic block copolymers (A2) and the acrylic block copolymer (B), was not stable in the film production, probably due to lower dispersibility.

In Comparative Example 6, there was examined a blend in which the styrenic block copolymer (A1) was changed to the styrenic block copolymer (A2) from the blend examined in Example 1. However, in this pressure-sensitive adhesive composition, film production was not stable probably because the dispersibility of the acrylic block copolymer (B) in the styrenic block copolymer (A2) had decreased.

In Comparative Example 7, there was examined a blend (blend not satisfying condition (1)) in which the acrylic block copolymer (B) was changed to an acrylic block copolymer having a lower melt viscosity than that of the styrenic block copolymer (A1) with respect to the blend examined in Example 5. In the case of the pressure-sensitive adhesive composition obtained by this blending, the film production was not stable probably because the melt viscosity was too low.

In Examples 1 and 5, resin pellets of each of the styrenic block copolymer (A1-1), the acrylic block copolymer (B-1), and the styrenic block copolymer (A2-1) were dry blended, and this dry blend was directly put into an extrusion molding machine to produce a film, only thereby providing a laminate film exhibiting good film formability (moldability), equivalent to a kneaded product (a film produced via composition pellets), and also exhibiting adequate unwinding force and adhesion.

In Comparative Examples 4 to 7, the laminate film directly produced from the dry blend was significantly deteriorated in the film formability (moldability) as compared to a film produced with each kneaded product, and the film production per se was difficult. It follows from what has been seen that a pressure-sensitive adhesive composition having the characteristics of the present application can be easily and stably produced according to the pressure-sensitive adhesive composition of the present application.

## Claims

1.    A pressure-sensitive adhesive composition, comprising a styrenic block copolymer (A1) and an acrylic block copolymer (B) and satisfying conditions (1) to (4) set forth below:

> (1) The melt viscosity (measured at a temperature of 230°C and a shear rate of 121.6 (1/sec) in accordance with ISO 11443:1995) of the styrenic block copolymer (A1) < the melt viscosity (measured at a temperature of 230°C and a shear rate of 121.6 (1/sec) in accordance with ISO 11443:1995) of the acrylic block copolymer (B);
> (2) The mass ratio [(A1):(B)] of the content of the styrenic block copolymer (A1) to the content of the acrylic block copolymer (B) in the pressure-sensitive adhesive composition is from 10:90 to 90:10;
> (3) The styrenic block copolymer (A1) is a hydrogenated product of a block copolymer (P1), including one or more polymer blocks (a11) containing a structural unit derived from an aromatic vinyl compound and one or more polymer blocks (a12) containing a structural unit derived from a conjugated diene; and
> (4) The acrylic block copolymer (B) includes one or more polymer blocks (b11) containing a structural unit derived from an acrylic acid ester and one or more polymer blocks (b12) containing a structural unit derived from a methacrylic acid ester, and has a number average molecular weight (Mn) of 60,000 or more and 300,000 or less.

2.    The pressure-sensitive adhesive composition according to claim 1, further satisfying a condition (5) set forth below:
(5) The melt viscosity (measured at a temperature of 190°C and a shear rate of 121.6 (1/sec) in accordance with ISO 11443:1995) of the styrenic block copolymer (A1) < the melt viscosity (measured at a temperature of 190°C and a shear rate of 121.6 (1/sec) in accordance with ISO 11443:1995) of the acrylic block copolymer (B).

3.    The pressure-sensitive adhesive composition according to claim 1 or 2, further comprising a styrenic block copolymer (A2) satisfying conditions (6) to (8) set forth below:

(6) The melt viscosity (measured at a temperature of 230°C and a shear rate of 121.6 (1/sec) in accordance with ISO 11443:1995) of the acrylic block copolymer (B) < the melt viscosity (measured at a temperature of 230°C and a shear rate of 121.6 (1/sec) in accordance with ISO 11443:1995) of the styrenic block copolymer (A2);

(7) The styrenic block copolymer (A2) is a hydrogenated product of a block copolymer (P2), including one or more polymer blocks (a21) containing a structural unit derived from an aromatic vinyl compound and one or more polymer blocks (a22) containing a structural unit derived from a conjugated diene; and

(8) The content of the polymer block (a21) in the block copolymer (P2) is from 5 to 25% by mass.

4. The pressure-sensitive adhesive composition according to claim 3, wherein the mass ratio [((A1) + (A2)):(B)] of the total content of the styrenic block copolymer (A1) and the styrenic block copolymer (A2) to the content of the acrylic block copolymer (B) is from 10:90 to 90:10.

5. The pressure-sensitive adhesive composition according to claim 3, wherein the mass ratio [(A1):(A2)] of the content of the styrenic block copolymer (A1) to the content of the styrenic block copolymer (A2) is from 10:90 to 90:10.

6. The pressure-sensitive adhesive composition according to any one of claims 1 to 5, wherein the content of the polymer block (b12) in the acrylic block copolymer (B) is from 5 to 30% by mass.

7. The pressure-sensitive adhesive composition according to any one of claims 1 to 6, further comprising a tackifier resin.

8. The pressure-sensitive adhesive composition according to claim 7, wherein the tackifier resin is a hydrocarbon resin.

9. A laminate, comprising: an adhesive layer including the pressure-sensitive adhesive composition according to any one of claims 1 to 8; and a base material.

10. A surface protection film, comprising the laminate according to claim 9.

11. The surface protection film according to claim 10, wherein the base material is a base material containing a polyolefin.

12. A method of producing a laminate, comprising a melt lamination molding by which an adhesive layer including the pressure-sensitive adhesive composition according to any one of claims 1 to 8 is provided onto a base material.

## INTERNATIONAL SEARCH REPORT

| | International application No. |
|---|---|
| | **PCT/JP2022/013779** |

**A. CLASSIFICATION OF SUBJECT MATTER**

*B32B 27/00*(2006.01)i; *B32B 27/30*(2006.01)i; *C09J 11/08*(2006.01)i; *C09J 125/10*(2006.01)i; *C09J 133/08*(2006.01)i; *C09J 133/10*(2006.01)i; *C09J 153/00*(2006.01)i; *C09J 7/24*(2018.01)i; *C09J 7/38*(2018.01)i
FI:    C09J125/10; C09J153/00; C09J133/08; C09J133/10; C09J11/08; C09J7/24; C09J7/38; B32B27/30 B; B32B27/30 A; B32B27/00 M

According to International Patent Classification (IPC) or to both national classification and IPC

**B. FIELDS SEARCHED**

Minimum documentation searched (classification system followed by classification symbols)

B32B27/00; B32B27/30; C09J11/08; C09J125/10; C09J133/08; C09J133/10; C09J153/00; C09J7/24; C09J7/38

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2019-157067 A (KURARAY CO) 19 September 2019 (2019-09-19)<br>entire text | 1-12 |
| A | JP 2016-56296 A (KURARAY CO) 21 April 2016 (2016-04-21)<br>entire text | 1-12 |
| A | JP 2020-139156 A (KURARAY CO) 03 September 2020 (2020-09-03)<br>entire text | 1-12 |
| A | JP 2012-236901 A (ASAHI KASEI CHEMICALS CORP) 06 December 2012 (2012-12-06)<br>entire text | 1-12 |
| A | JP 2003-64337 A (KURARAY CO) 05 March 2003 (2003-03-05)<br>entire text | 1-12 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 June 2022** | **14 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/013779**

| Patent document cited in search report | | | Publication date (day/month/year) | Patent family member(s) | | | Publication date (day/month/year) |
|---|---|---|---|---|---|---|---|
| JP | 2019-157067 | A | 19 September 2019 | (Family: none) | | | |
| JP | 2016-56296 | A | 21 April 2016 | (Family: none) | | | |
| JP | 2020-139156 | A | 03 September 2020 | WO | 2021/177194 | A1 | |
| JP | 2012-236901 | A | 06 December 2012 | (Family: none) | | | |
| JP | 2003-64337 | A | 05 March 2003 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015076332 A
- JP 2012502135 A
- JP 2012502136 A
- JP 2011132298 A
- JP H0693060 A
- JP H05507737 A
- JP H11335432 A
- JP 5936791 B

**Non-patent literature cited in the description**

- POLYMER HANDBOOK Forth Edition. Wiley Interscience, Inc, 1999, vol. VII, 675-714
- Polymer Engineering and Science. 1974, vol. 14, 147-154
- Macromolecular Chemistry and Physics. 2000, vol. 201, 1108-1114